# EUROPEAN PATENT APPLICATION

(11) **EP 3 085 712 A1**
(43) Date of publication of application: **26.10.2016**
(21) Application number: 14872325.7
(22) Date of filing: 19.12.2014
(51) Int. Cl.: C08F 2/01, B01F 3/10, B01F 5/00, B01F 15/04, B01F 15/06, C08F 10/00, C08F 12/04, C08F 18/04, C08F 20/18, C08F 20/42, C08F 36/04

(54) **CONTINUOUS REACTION DEVICE AND CONTINUOUS POLYMERIZATION METHOD USING SAME**

(30) Priority: 20.12.2013 JP 2013263827
(71) Applicant: Horiba Stec, Co., Ltd., Kyoto-shi, Kyoto 601-8116 (JP)
(72) Inventor: HIRAHARA, Kazuhiro, Kyoto-shi Kyoto 601-8116 (JP); TAKEDA, Takanobu, Kyoto-shi Kyoto 601-8116 (JP); SHIMIZU, Tetsuo, Kyoto-shi Kyoto 601-8116 (JP)
(74) Representative: Isarpatent
(86) International application number: PCT/JP2014/083802
(87) International publication number: WO 2015/093611

(57) **Abstract**

The present invention provides production of a compound with high productivity. The present invention includes a first raw material feeding unit, a second raw material feeding unit, a reactor unit, and a controller configured to control the amount of a first raw material being fed from the first raw material feeding unit to the reactor unit, the amount of a second raw material being fed from the second raw material feeding unit to the reactor unit, the temperature of the first raw material being fed from the first raw material feeding unit to the reactor unit, and the temperature of the second raw material being fed from the second raw material feeding unit to the reactor unit. The first raw material is a raw material monomer solution containing a raw material monomer. The second raw material is a polymerization initiator solution containing a polymerization initiator. A reaction product is a polymer compound resulting from a living anionic polymerization reaction of the raw material monomer.

## Description

### Field

The present invention relates to a continuous reaction apparatus for carrying out a continuous polymerization reaction of a raw material, and a method of continuous polymerization using the continuous reaction apparatus.

### Background

A technique generally employed to mass-produce a compound such as a polymer compound by a polymerization reaction is a batch-wise production method. However, the batch-wise method requires upsizing of a reaction apparatus, which is a production apparatus, in proportion to the amount of the polymer compound to produce. In living anionic polymerization or other polymer compound synthesis where a polymerization initiator, which should be handled with care, is used, the production apparatus requires various mechanisms designed by taking safety into consideration. When the main body of the reaction apparatus becomes larger, these various mechanisms designed with attention to safety also become larger and more complicated, presenting a problem of an increase in production costs, running costs, and maintenance costs.

As a method other than the batch method, a continuous reaction apparatus in which a micro-reactor is used has been developed (see Patent Document 1). Patent Document 1, for example, discloses a micro-mixing device for mixing a first reaction solution and a second reaction solution to cause a rapid temperature increase or rapid cooling so as to instantaneously achieve a predetermined temperature of a reaction field and synthesize uniform fine particles, the micro-mixing device having a structure where the entire micro-mixing portion is accommodated within a high pressure-resistant jacket within which a medium for cooling or heating can be distributed. As the synthesis using the micro-reactor, synthesis of colloidal silver, which contains metal nano-particles, and synthesis of metal oxide nano-particles with the use of high-temperature highpressure water are developed. Besides, the synthesis using the micro-reactor is reported to achieve high selectivity in a halogen-lithium exchange reaction and in a formylation reaction of the generated organic lithium and dimethylformamide. However, in a reaction in the micro-reactor, despite the continuous reaction mode adopted, the flow speed of a raw material flowing into the reactor is several dozens to several hundreds of milliliters per hour, which is not suitable for synthesis in large quantity. In addition, adoptable reaction systems are limited. Therefore, when employing a system accompanied by precipitation of salt that is insoluble in a reaction system solvent after a reaction, problems of salting-out on the reactor and clogging caused by the precipitation of salt remain unsolved.

As a method of continuous polymerization of polymer compounds using a static stirrer, Patent Document 2 discloses a method of continuously producing a biodegradable polyester polymer, Patent Document 3 discloses a method of producing a lactone copolymer, Patent Document 4 discloses a method of continuously producing a polyurethane that is soluble for processing, Patent Document 5 discloses a method of continuously producing a polyester polymer, and Patent Document 6 discloses a method of producing a polyester block copolymer. As a method of continuous polymerization of polymer compounds using a static stirrer and a polymerization initiator, Patent Document 7 discloses a method of continuously producing a living cationic polymer and Patent Document 8 discloses a method of continuously producing a polymer by anionic polymerization.

### Citation List

### Patent Literature

Patent Literature 1: Japanese Patent Application Laid-open No. 2010-075914
Patent Literature 2: Japanese Patent No. 3309502
Patent Literature 3: Japanese Patent No. 3448927
Patent Literature 4: Japanese Patent No. 4537535
Patent Literature 5: Japanese Patent No. 3590383
Patent Literature 6: Japanese Patent Application Laid-open No. 2008-7740
Patent Literature 7: Japanese Patent Application Laid-open No. 2010-241908
Patent Literature 8: Japanese Patent Application Laid-open No. H6-56910

### Summary

### Technical Problem

The methods disclosed in Patent Documents 2 to 6 are only applicable to condensation polymerization between two molecules for polyester production, and therefore are not applicable to continuous polymerization with the use of an initiator. By the methods disclosed in Patent Documents 7 and 8, it is practically difficult to produce a living polymer with excellent reproducibility while controlling the molecular weight and the degree of distribution.

As an example of block copolymer production, Patent Document 7 discloses a method of producing a living cationic polymer where a cation serves as the active species during polymerization, not a method of producing a block copolymer where an anion serves as the active species during polymerization.

Thus, there is a room for improvement in a method and an apparatus for synthesizing a compound by a continuous synthesis reaction with the use of a static stirrer, which is what is called a static mixer. For example, when synthesizing a polymer compound or a block polymer by living anionic polymerization, high productivity is desired in production of the compound.

The present invention is devised in view of the above circumstances, and an object of the present invention is to provide a continuous reaction apparatus capable of producing a reaction product with high productivity and a method of continuous polymerization using the continuous reaction apparatus.

### Solution to Problem

In order to solve the above-mentioned problem and achieve the object, the present invention relates to a continuous reaction apparatus including: a first raw material feeding unit that comprises a first raw material vessel configured to store therein a first raw material, a first feed line configured to distribute the first raw material stored in the first raw material vessel, and a first heat exchanger configured to exchange heat with the first raw material flowing through the first feed line, the first raw material feeding unit being operable to perform feeding of the first raw material that has undergone heat exchange by the heat exchanger; a second raw material feeding unit that comprises a second raw material vessel configured to store therein a second raw material, a second feed line configured to distribute the second raw material stored in the second raw material vessel, and a second heat exchanger configured to exchange heat with the second raw material flowing through the second feed line, the second raw material feeding unit being operable to perform feeding of the second raw material that has undergone heat exchange by the heat exchanger; a reactor unit that comprises a reactor line into which the first raw material is continuously fed from the first raw material feeding unit and the second raw material is continuously fed from the second raw material feeding unit and a static stirrer disposed on the reactor line and being operable to statically stir the first raw material and the second raw material fed into the reactor line, the reactor unit being operable to stir the first raw material and the second raw material with the static stirrer to continuously produce a reaction product of the first raw material and the second raw material; and a controller configured to control an amount and a temperature of the first raw material that is being fed from the first raw material feeding unit into the reactor unit and an amount and a temperature of the second raw material that is being fed from the second raw material feeding unit into the reactor unit, the first raw material being a raw material monomer solution containing a raw material monomer, the second raw material being a polymerization initiator solution containing a polymerization initiator, and the reaction product being a polymer compound resulting from a living anionic polymerization reaction of the raw material monomer.

It is preferable that the continuous reaction apparatus further includes: at least one other raw material feeding unit that comprises another raw material vessel configured to store therein another raw material different from at least one of the first raw material or the second raw material, another feed line configured to distribute the other raw material stored in the other raw material vessel, and a heat exchanger configured to exchange heat with the other raw material flowing through the other feed line, the raw material feeding unit being operable to perform feeding of the other raw material that has undergone heat exchange by the heat exchanger, wherein the reactor unit includes a plurality of static stirrers, the static stirrers being connected to the reactor line in series, and the temperature control mechanism being provided for the static stirrer located most upstream, in the other raw material feeding unit, the other feed line is connected to the reactor line at a position between the static stirrer located on an upstream side and the static stirrer located on a downstream side and is operable to feed the other raw material flowing through the other feed line into the reactor line through which the reaction product discharged from the static stirrer located on the upstream side flows, the reactor unit is operable to statically stir the reaction product discharged from the static stirrer located on the upstream side and the other raw material by using the static stirrer located on the downstream side to continuously produce a reaction product of the reaction product with the other raw material, and the controller is operable to control an amount and a temperature of the other raw material that is being fed from the other raw material feeding unit into the reactor unit.

In order to solve the above-mentioned problem and achieve the object, the present invention relates to a continuous reaction apparatus comprising: a static stirrer in which a polymerization initiator and one or more types of raw material monomer solutions are fed and the polymerization initiator and the one or more types of raw material monomer solutions are statically stirred, wherein a flow rate and a temperature are controlled while the polymerization initiator and the one or more types of raw material monomer solutions are introduced into the static stirrer, and a reaction temperature in the static stirrer is controlled.

In order to solve the above-mentioned problem and achieve the object, the present invention relates to a continuous reaction apparatus including: a static stirrer in which a polymerization initiator solution and one or more types of raw material monomer solutions are fed and the polymerization initiator solution and the one or more types of raw material monomer solutions are statically stirred, a mechanism configured to individually feed the polymerization initiator solution and the one or more types of raw material monomer solutions continuously into the static stirrer, and a mechanism configured to continuously discharge a reaction product produced in the static-stirring device out of a system.

In order to solve the above-mentioned problem and achieve the object, the present invention relates to a method of continuous polymerization including: with use of the above-mentioned continuous reaction apparatus, a step of continuously feeding the first raw material and the second raw material into the reactor unit while regulating the amount and the temperature of the first raw material that is being fed from the first raw material feeding unit into the reactor unit and the amount and the temperature of the second raw material that is being fed from the second raw material feeding unit into the reactor unit, and a step of stirring the first raw material and the second raw material fed into the reactor unit by using the static stirrer to carry out a polymerization reaction and discharging the resulting reaction product downstream from the static stirrer.

In order to solve the above-mentioned problem and achieve the object, the present invention relates to a method of continuous polymerization including: with use of the above-mentioned continuous reaction apparatus, a step of continuously feeding the first raw material and the second raw material into the reactor unit while regulating the amount and the temperature of the first raw material that is being fed from the first raw material feeding unit into the reactor unit and the amount and the temperature of the second raw material that is being fed from the second raw material feeding unit into the reactor unit, a step of stirring the first raw material and the second raw material fed into the reactor unit by using the static stirrers while controlling the temperature and discharging the resulting reaction product downstream from the static stirrer located on the upstream side, and a step of performing at least one round of a series of operation, the series of operation comprising continuously feeding the other raw material into the reactor unit while regulating the amount and the temperature of the other raw material that is being fed from the other raw material feeding unit into the reactor unit, stirring, by using the static stirrer located on the downstream side, the reaction product discharged downstream from the static stirrer located on the upstream side with the other raw material to carry out a polymerization reaction, and discharging the resulting reaction product downstream from the static stirrer located on the downstream side.

### Advantageous Effects of Invention

The continuous reaction apparatus according to the present invention and the method of continuous polymerization using the continuous reaction apparatus have an effect of achieving high productivity in obtaining a reaction product. In addition, the continuous reaction apparatus according to the present invention and the method of continuous polymerization using the continuous reaction apparatus are, in a continuous polymerization reaction with the use of a static stirrer, capable of stably controlling the flow rates and the temperatures of one or more types of raw material monomer solutions and a polymerization initiator solution at the time of introduction and carrying out a continuous reaction of the raw materials, and, as a result, mass production is made possible in an amount several dozens to several hundreds of times greater than the amount obtained by polymerization through a batch reaction in an apparatus having the corresponding volume. This can achieve high efficiency in mass production of a homopolymer or a block copolymer. Besides, the continuous reaction apparatus according to the present invention and the method of continuous polymerization using the continuous reaction apparatus can have enhanced control over polymerization, for example, in terms of the molecular weight and the degree of distribution of the homopolymer or the block copolymer, and can produce the polymer compound having a desired molecular weight and a desired degree of distribution with high accuracy. The continuous reaction apparatus and the method of continuous polymerization using the continuous reaction apparatus, preferably by controlling the temperature of the static stirrer, that is, the temperature during polymerization, can control a polymerization reaction with even higher accuracy.

Furthermore, when producing a polymer compound in the field of homopolymer and block copolymer production by a continuous living anionic polymerization reaction, the continuous reaction apparatus according to the present invention and the method of continuous polymerization using the continuous reaction apparatus can improve efficiency in mass production, downsize the apparatus, and significantly reduce the costs of production and maintenance of the apparatus.

### Brief Description of Drawings

FIG. 1 is a schematic view illustrating a general structure of an embodiment of a continuous reaction apparatus.
FIG. 2 is a sectional view illustrating a general structure of a static stirrer.
FIG. 3 is a schematic view illustrating a general structure of internal elements of a static stirrer.
FIG. 4 is a schematic view illustrating a general structure of a modification of a metering pump.
FIG. 5 is a schematic view illustrating a general structure of another embodiment of a continuous reaction apparatus.
FIG. 6 is a schematic view illustrating a general structure of another embodiment of a continuous reaction apparatus.
FIG. 7 is a schematic view illustrating a general structure of another embodiment of a continuous reaction apparatus.
FIG. 8 is a schematic view illustrating a general structure of another embodiment of a continuous reaction apparatus.
FIG. 9 is a descriptive view for describing operation of a continuous reaction apparatus.

### Description of Embodiments

The present invention will be described in detail referring to drawings. The scope of the present invention, however, is not limited to the following modes for carrying out the invention (hereinafter, the modes are also referred to as embodiments). Constituent elements in the following embodiments include ones easily envisioned by those skilled in the art, and ones substantially identical to each other, or what are called equivalents. The constituent elements disclosed in the following embodiments can be combined as needed.

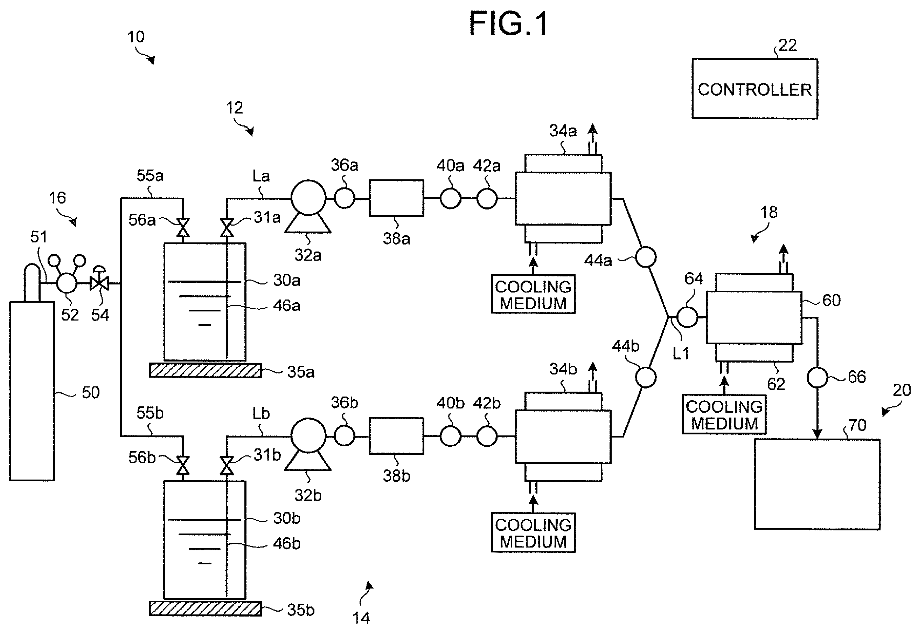

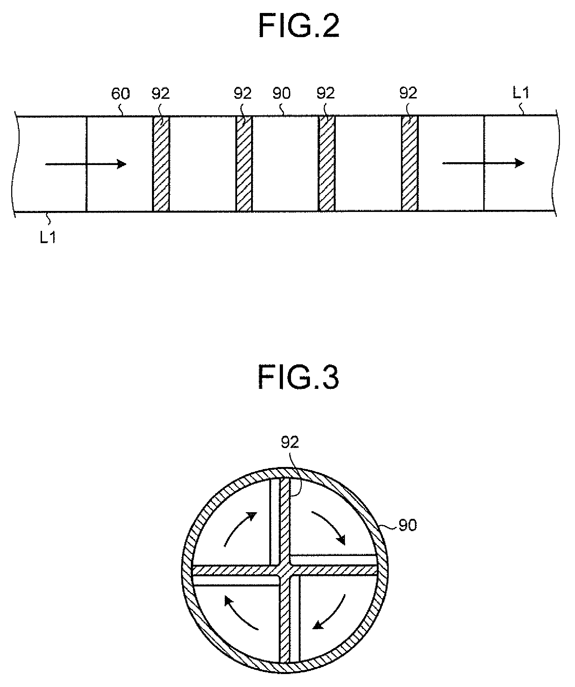

Referring to FIG. 1 to FIG. 3, an embodiment of a continuous reaction apparatus will be described. FIG. 1 is a schematic view illustrating a general structure of the embodiment of a continuous reaction apparatus. FIG. 2 is a sectional view illustrating a general structure of a static stirrer. FIG. 3 is a schematic view illustrating a general structure of internal elements of a static stirrer.

A continuous reaction apparatus 10 illustrated in FIG. 1 has a first raw material feeding unit 12 for feeding a first raw material, a second raw material feeding unit 14 for feeding a second raw material, a pressure regulator unit 16 for supplying gas (an inert gas) to the first raw material feeding unit 12 and the second raw material feeding unit 14 so as to pressurize the interior of the pathways, a reactor unit 18 in which the first raw material and the second raw material are fed from the first raw material feeding unit 12 and the second raw material feeding unit 14, respectively, and the first raw material and the second raw material thus fed are statically stirred so as to carry out a chemical reaction to produce a compound, a recovery unit 20 for recovering the compound produced in the reactor unit 18, and a controller 22 for controlling the units. In the continuous reaction apparatus 10, the atmosphere in the synthesis reaction is preferably an atmosphere of an inert gas such as argon gas, nitrogen gas, or helium gas. Accordingly, the continuous reaction apparatus 10 preferably has an inert gas atmosphere in spaces where the first raw material and the second raw material are stored and distributed and spaces where the synthesized compound is stored and distributed. In the continuous reaction apparatus 10, various mechanisms, distribution pathways, and the like are preferably formed of stainless steel and/or a fluororesin, for example, and accordingly, in the continuous reaction apparatus 10, contamination of the raw materials caused by the units and corrosion of the units can be inhibited. As long as the continuous reaction apparatus 10 is capable of inhibiting the contamination of the raw materials and inhibiting the corrosion of the units, it may be formed of various materials.

In the continuous reaction apparatus 10, various substances can be used as the first raw material and the second raw material, and accordingly various compounds can be produced. One of the first raw material and the second raw material may be used as a polymerization initiator for initiating a polymerization reaction of the other of the first raw material and the second raw material. One of the first raw material or the second raw material may be a solution containing a raw material element and/or a raw material compound (a raw material solution). The relation between the raw materials and the compound to be produced will be described later.

The first raw material feeding unit 12 is a mechanism for storing the first raw material and feeding the first raw material into the reactor unit 18. The first raw material feeding unit 12 has a first raw material vessel 30a, a control valve 31a, a metering pump 32a, a heat exchanger 34a, a mass meter 35a, an upstream pressure sensor 36a, a flowmeter 38a, a downstream pressure sensor 40a, an upstream temperature sensor 42a, and a downstream temperature sensor 44a. The components of the first raw material feeding unit 12 are connected together via a first feed line La. One end of the first feed line La is connected to the first raw material vessel 30a, while the other end of the first feed line La is connected to the reactor unit 18. The first feed line La transfers the first raw material stored in the first raw material vessel 30a to the reactor unit 18. Components of the first raw material feeding unit 12, that is, the control valve 31a, the metering pump 32a, the upstream pressure sensor 36a, the flowmeter 38a, the downstream pressure sensor 40a, the upstream temperature sensor 42a, the heat exchanger 34a, and the downstream temperature sensor 44a, are provided on the pathway of the first feed line La in this order in a direction from the first raw material vessel 30a toward the reactor unit 18.

The first raw material vessel 30a is a tank for storing therein the first raw material. The first raw material vessel 30a is supplied with an inert gas by a pressure regulator unit 16 described later and is, as a result, internally pressurized. The first raw material vessel 30a is preferably a tank resistant to a pressure of not lower than 0.5 MPa and not higher than 2 MPa. The first raw material vessel 30a has a dip tube 46a inserted thereinto. One end of the dip tube 46a is near the bottom surface of the first raw material vessel 30a, while the other end of the dip tube 46a is connected to the first feed line La. When the interior space is pressurized by the pressure regulator unit 16 described later, the first raw material vessel 30a discharges the first raw material stored therein into the dip tube 46a. The dip tube 46a transfers the first raw material stored in and fed into the first raw material vessel 30a, to the first feed line La.

The control valve 31a is provided on the downstream side of the connection of the first feed line La with the first raw material vessel 30a. The control valve 31a is a valve operable to be switched at least between an open state and a closed state. The control valve 31a, in its open state, allows the first raw material to flow from the first raw material vessel 30a through the first feed line La, while in its closed state the control valve 31a does not allow the first raw material to flow from the first raw material vessel 30a through the first feed line La. As switched between its open state and its closed state, the control valve 31a changes between allowing the first raw material to be fed through the first feed line La into the reactor unit 18 and stopping the feeding.

The metering pump 32a is provided on the first feed line La on the downstream side of the control valve 31a. The metering pump 32a is a mechanism for regulating the flow rate of the first raw material flowing through the first feed line La. As the metering pump 32a, a double diaphragm pump, a Moineau pump, a plunger pump, or a triple plunger pump can be used, for example. As long as the metering pump 32a is basically capable of accurately controlling the flow rate, it may adopt any of various operating modes. The metering pump 32a, when its various control parameters such as the rotational speed are regulated, achieves a predetermined flow rate of the first raw material flowing through the first feed line La.

The heat exchanger 34a exchanges heat with the first raw material flowing through the first feed line La. The heat exchanger 34a according to the embodiment holds a cooling medium as its heating medium circulating therein for exchanging heat with the first raw material, and the cooling medium is used to cool the first raw material. The heat exchanger 34a regulates the amount of the circulating cooling medium and the amount of heat being exchanged to regulate the temperature of the first raw material (the temperature of the first raw material at the time of introduction).

The mass meter 35a measures the mass of the first raw material vessel 30a. With the mass of the first raw material vessel 30a measured by the mass meter 35a, the amount of the first raw material stored in the first raw material vessel 30a can be determined. As the mass meter 35a, a load cell can be used. The upstream pressure sensor 36a is provided on the first feed line La on the upstream side of the flowmeter 38a, more specifically between the metering pump 32a and the flowmeter 38a, and measures the pressure of the first raw material flowing through the first feed line La at a position on the upstream side of the flowmeter 38a. The flowmeter 38a is provided on the first feed line La between the metering pump 32a and the heat exchanger 34a, or between the upstream pressure sensor 36a and the downstream pressure sensor 40a in the embodiment, and measures the flow rate of the first raw material flowing through the first feed line La. As the flowmeter 38a, a liquid mass flow meter, an ultrasonic flowmeter, or a Coriolis flowmeter can be used, for example. The downstream pressure sensor 40a is provided on the first feed line La on the downstream side of the flowmeter 38a, more specifically between the flowmeter 38a and the heat exchanger 34a, and measures the pressure of the first raw material flowing through the first feed line La at a position on the downstream side of the flowmeter 38a. The upstream temperature sensor 42a is provided on the first feed line La on the upstream side of the heat exchanger 34a, more specifically between the metering pump 32a and the heat exchanger 34a, and measures the temperature of the first raw material in the first feed line La at a position on the upstream side of the heat exchanger 34a, that is, the temperature of the first raw material before passing through the heat exchanger 34a. The downstream temperature sensor 44a is provided on the first feed line La on the downstream side of the heat exchanger 34a, more specifically between the heat exchanger 34a and the reactor unit 18, and measures the temperature of the first raw material in the first feed line La at a position on the downstream side of the heat exchanger 34a, that is, the temperature of the first raw material that has passed through the heat exchanger 34a. The mass meter 35a, the upstream pressure sensor 36a, the flowmeter 38a, the downstream pressure sensor 40a, the upstream temperature sensor 42a, and the downstream temperature sensor 44a send their measurement results to the controller 22.

The first raw material feeding unit 12 transfers the first raw material stored in the first raw material vessel 30a through the first feed line La to the reactor unit 18. With the metering pump 32a regulating the flow rate of the first raw material flowing through the first feed line La (the flow rate of the first raw material at the time of introduction), the first raw material feeding unit 12 transfers a predetermined amount of the first raw material to the reactor unit 18. With the heat exchanger 34a cooling the first raw material flowing through the first feed line La to regulate the temperature of the first raw material (the temperature of the first raw material at the time of introduction), the first raw material feeding unit 12 can feed the first raw material at a predetermined temperature into the reactor unit 18. The flow rate of the first raw material flowing through the first feed line La is preferably not lower than 10 ml per minute and not higher than 20,000 ml per minute (that is, not lower than 10 ml/min and not higher than 20,000 ml/min), more preferably not lower than 100 ml per minute and not higher than 5,000 ml per minute (that is, not lower than 100 ml/min and not higher than 5,000 ml/min), and further preferably not lower than 500 ml per minute and not higher than 2,000 ml per minute (that is, not lower than 500 ml/min and not higher than 2,000 ml/min). The same conditions of the flow rate also apply to the other raw material feeding units described later.

The second raw material feeding unit 14 is a mechanism for storing the second raw material and feeding the second raw material into the reactor unit 18. The second raw material feeding unit 14 has a second raw material vessel 30b, a control valve 31b, a metering pump 32b, a heat exchanger 34b, a mass meter 35b, an upstream pressure sensor 36b, a flowmeter 38b, a downstream pressure sensor 40b, an upstream temperature sensor 42b, and a downstream temperature sensor 44b. The components of the second raw material feeding unit 14 are connected together via a second feed line Lb. The second raw material vessel 30b has a dip tube 46b inserted thereinto. The dip tube 46b is connected to the second feed line Lb. The second raw material feeding unit 14 has the same fundamental configuration as the fundamental configuration of the first raw material feeding unit 12 except that the second raw material is stored therein and is to be fed into the reactor unit 18, and therefore description of the components of the second raw material feeding unit 14 is omitted.

The second raw material feeding unit 14 transfers the second raw material stored in the second raw material vessel 30b through the second feed line Lb to the reactor unit 18. With the metering pump 32b regulating the flow rate of the second raw material flowing through the second feed line Lb (the flow rate of the second raw material at the time of introduction), the second raw material feeding unit 14 transfers a predetermined amount of the second raw material to the reactor unit 18. With the heat exchanger 34b cooling the second raw material flowing through the second feed line Lb to regulate the temperature of the second raw material (the temperature of the second raw material at the time of introduction), the second raw material feeding unit 14 can feed the second raw material at a predetermined temperature into the reactor unit 18.

The pressure regulator unit 16 supplies an inert gas to the first raw material vessel 30a and the second raw material vessel 30b to pressurize the interior of the first raw material vessel 30a and the second raw material vessel 30b for pressure regulation and to create an inert atmosphere in the distribution pathways for the first raw material and the second raw material. The pressure regulator unit 16 has a pressurized cylinder 50, a gas supply tube 51, a reducing valve 52, branch tubes 55a and 55b, and gas control valves 56a and 56b.

The pressurized cylinder 50 is filled with an inert gas. As piping connected to the pressurized cylinder 50, the gas supply tube 51 guides the inert gas discharged from the pressurized cylinder 50. Provided on the gas supply tube 51, the reducing valve 52 reduces the pressure of the inert gas flowing through the gas supply tube 51, to a predetermined pressure or lower. A pressure regulator device 54 is provided on the downstream side of the reducing valve 52 of the gas supply tube 51. The pressure regulator device 54 regulates the pressure of the inert gas that has passed through the reducing valve 52. With the pressure regulator unit 16 having the pressure regulator device 54 and with the pressure regulator device 54 regulating the pressure of the inert gas flowing through the gas supply tube 51, the pressure applied in the first raw material vessel 30a and the second raw material vessel 30b can become further stable. As the pressure regulator device 54, UR-7340 from HORIBA STEC, Co., Ltd. can be used, for example. By using, for example, UR-7340 from HORIBA STEC, Co., Ltd. as the pressure regulator device 54, pressure regulation can be performed more stably. The pressure regulator unit 16 preferably pressurizes the first raw material vessel 30a and the second raw material vessel 30b with a pressure of not higher than 2 MPa and more preferably with a pressure of not higher than 1.5 MPa.

One end of the branch tube 55a is connected to the gas supply tube 51, while the other end of the branch tube 55a is connected to the first raw material vessel 30a. The branch tube 55a supplies the inert gas supplied from the gas supply tube 51, to the first raw material vessel 30a. The gas control valve 56a is provided on the branch tube 55a, and controls the branch tube 55a between its open state and its closed state to allow or not allow the inert gas to be supplied to the first raw material vessel 30a. One end of the branch tube 55b is connected to the gas supply tube 51, while the other end of the branch tube 55b is connected to the second raw material vessel 30b. The branch tube 55b supplies the inert gas supplied from the gas supply tube 51, to the second raw material vessel 30b. The gas control valve 56b is provided on the branch tube 55b, and controls the branch tube 55b between its open state and its closed state to allow or not allow the inert gas to be supplied to the second raw material vessel 30b.

The pressure regulator unit 16 supplies the inert gas from the pressurized cylinder 50 through the gas supply tube 51 and the branch tubes 55a and 55b to the first raw material vessel 30a and the second raw material vessel 30b to pressurize the first raw material vessel 30a and the second raw material vessel 30b and create an inert gas atmosphere inside the first raw material vessel 30a and the second raw material vessel 30b. With the pressure regulator device 54 and the gas control valves 56a and 56b, the pressure regulator unit 16 regulates the pressures in the first raw material vessel 30a and the second raw material vessel 30b.

The reactor unit 18 stirs the first raw material fed from the first raw material feeding unit 12 and the second raw material fed from the second raw material feeding unit 14 to carry out a reaction to produce a compound. The reactor unit 18 has a static stirrer 60 for stirring the first raw material and the second raw material, a temperature control mechanism 62 for controlling the temperature of the static stirrer 60, an upstream temperature sensor 64, and a downstream temperature sensor 66. The reactor unit 18 further has a reactor line L1. The reactor line L1 is connected to the first feed line La, the second feed line Lb, and the recovery unit 20. In the reactor unit 18, the upstream temperature sensor 64, the static stirrer 60, and the downstream temperature sensor 66 are provided on the pathway of the reactor line L1 in this order from the upstream side in the direction of the flow of the materials.

The static stirrer 60 is a stirrer equipped with no actuator and is what is called a static mixer. As the static stirrer 60, a generally available static stirrer can be used. As illustrated in FIG. 2, the static stirrer 60 has a cylindrical tube 90 having, for example, an appropriate length, and a plurality of internal elements 92 provided in the interior of the cylindrical tube 90. Into the interior of the cylindrical tube 90, the first raw material and the second raw material flow. The cylindrical tube 90 may have different diameters at different positions thereof or may have a uniform diameter. As illustrated in FIG. 3, the internal elements 92 are provided in the interior of the cylindrical tube 90 and serve as baffle plates for partially blocking the cylindrical tube 90. The internal elements 92 are plates inclined to the extending direction of the cylindrical tube 90, and rotate the fluid flowing through the cylindrical tube 90. In this way, the static stirrer 60 stirs the first raw material and the second raw material. As long as being capable of efficiently mixing and stirring two or more raw materials, the static stirrer 60 is not particularly limited in terms of the diameter and the shape of its piping, the form of the substance that fills the static stirrer 60, and the number of its spacer units. Instead of the internal elements 92, a spacer such as a bead and a Raschig ring may be used to fill the interior, or a baffle plate may be disposed in the piping. As for the internal elements 92, each rectangular plate is not particularly limited in terms of the direction of twist thereof and can be either a right element or a left element. The length of the internal elements 92 is preferably, but not limited to, 1.2 times to 2.0 times the inner diameter of the static stirrer 60.

The flow speed of the raw materials as liquid being transported through the cylindrical tube 90 is 10 mm per second to 3,000 mm per second (that is, not lower than 10 mm/s and not higher than 3,000 mm/s) and is more preferably 200 mm per second to 2,000 mm per second (that is, not lower than 200 mm/s and not higher than 2,000 mm/s). Preferably, the static stirrer 60 is highly effective in stirring using the internal elements 92 and is capable of ensuring at least certain flow speeds of the raw material solutions. The inner diameter of the cylindrical tube 90 is preferably not smaller than 5 mm and not greater than 100 mm and is more preferably not smaller than 10 mm and not greater than 50 mm. With the inner diameter of the cylindrical tube 90 being not smaller than 5 mm, the first raw material and the second raw material can be distributed in predetermined amounts or greater and the amount of the compound produced can be further increased. With the inner diameter of the cylindrical tube 90 being not greater than 100 mm, the two raw materials can be suitably stirred and subjected to a reaction in a uniform fashion.

The temperature control mechanism 62 is provided on the outer circumference of the static stirrer 60 and controls the temperatures of the materials flowing through the static stirrer 60. The temperature control mechanism 62 constitutes the outer piping of a double tube that surrounds the outer circumference of the static stirrer 60, and allows a temperature-controlled cooling medium to flow on the outer circumference of the static stirrer 60 so as to perform accurate temperature control. The configuration of the temperature control mechanism 62 is not limited to the double tube configuration. The temperature control mechanism 62 exchanges heat with the substance flowing through the static stirrer 60 to control the temperature of the substance flowing through the static stirrer 60. According to the embodiment, the temperature control mechanism 62 cools the compound that is heated through stirring and the chemical reaction of the two raw materials in the static stirrer 60. The temperature of the substance to be subjected to temperature control by the temperature control mechanism 62 varies depending on the reactant, and is preferably not lower than -100°C and not higher than +20°C and is more preferably not lower than -60°C and not higher than -10°C.

The upstream temperature sensor 64 is provided on the reactor line L1 on the upstream side of the static stirrer 60, and measures the temperature of the substance in the reactor line L1 at a position on the upstream side of the static stirrer 60, that is, the temperature of the substance before the substance passes through the static stirrer 60. The downstream temperature sensor 66 is provided on the reactor line L1 on the downstream side of the static stirrer 60, and measures the temperature of the compound in the reactor line L1 at a position on the downstream side of the static stirrer 60, that is, the temperature of the compound (substance) after the compound passes through the static stirrer 60. The upstream temperature sensor 64 and the downstream temperature sensor 66 send their measurement results to the controller 22.

The static stirrer 60 has a surface area per unit volume much greater than the surface area per unit volume of a batch reactor, is easily cooled and heated, and allows the content to efficiently move within the static stirrer 60, thereby giving an excellent reaction rate. Accordingly, the reactor unit 18 can produce the compound with high productivity. In addition, with the temperature control mechanism 62 controlling the temperature in the static stirrer 60, the reaction can be preferably controlled.

The reactor unit 18 may have such incidents that the reaction space in the static stirrer 60 is too small to complete the reaction or too much heat is produced at the time of reaction to adequately cool the reaction mixture. In these cases, a plurality of the static stirrers 60 may be connected in series.

In order to complete the reaction, a certain amount of heat is sometimes required. In that case, a plurality of the static stirrers 60 each equipped with the temperature control mechanism 62 may be connected in series to increase the temperature of a sequence of the static stirrers 60 progressively from the upstream side to the downstream side with the temperature control mechanisms 62. The temperature control mechanism 62 or the temperature control mechanisms 62 can regulate the temperature or the temperatures to fall within the range from not lower than - 10°C and not higher than 100°C and more preferably within the range from not lower than 0°C and not higher than 80°C, for example.

The recovery unit 20 has a recovery vessel 70. The recovery vessel 70 is a vessel for storing therein the compound. The recovery vessel 70 stores therein the compound discharged from the reactor line L1. The recovery vessel 70 may have a heat exchanger and control the temperature at which the compound is stored.

The controller 22 controls operation of the units of the continuous reaction apparatus 10. Based on the results of measurement by the units, the controller 22 controls the flow rates and the temperatures of the first raw material and the second raw material and controls the temperature in the reactor unit 18 to control production of the compound.

In the continuous reaction apparatus 10, the flow rates of the raw material solutions such as the first raw material and the second raw material are accurately controlled before the raw material solutions are introduced into the static stirrer 60. In the continuous reaction apparatus 10, the range of fluctuations in the flow rates is preferably not greater than ±2%, more preferably not greater than ±1%, and further preferably not greater than ±0.5%.

In the continuous reaction apparatus 10, the metering pumps 32a and 32b control the flow rates of the first raw material and the second raw material to accurately control the flow rates of the raw material solutions, and therefore the range of fluctuations in the flow rates can be regulated not to exceed ±2%, preferably not to exceed ±1%, and more preferably not to exceed ±0.5%.

The continuous reaction apparatus 10 performs temperature control by using the heat exchangers 34a and 34b to cool the first raw material and the second raw material, in advance, before the first raw material and the second raw material are fed into the static stirrer 60. Therefore, even when the chemical reaction occurs rapidly in the static stirrer 60 to generate a relatively large amount of heat of reaction in a short time, an excessive increase in the temperature in the static stirrer 60 can be inhibited. Accordingly, production of the compound in the static stirrer 60 can be suitably performed.

In the continuous reaction apparatus 10, the concentrations of the raw material solutions such as the first raw material and the second raw material are preferably not lower than 0.1 mol/l and not higher than 10 mol/l and are more preferably not lower than 0.5 mol/l and not higher than 3 mol/l.

Although it is described above that the continuous reaction apparatus 10 thus performs temperature control by using the heat exchangers 34a and 34b to cool the first raw material and the second raw material in advance, this configuration is not limited. Provided that the continuous reaction apparatus 10 performs temperature control of the first raw material and the second raw material in advance by using the heat exchangers 34a and 34b, the heat exchangers 34a and 34b may be used to heat the first raw material and the second raw material or may be switched between heating operation and cooling operation depending on each of the first raw material and the second raw material. In the continuous reaction apparatus 10, in order to suitably control the reaction in the reactor unit 18, the temperature control mechanism 62 is preferably, but not necessarily, provided for the static stirrer 60 in the reactor unit 18 to control the temperature in the static stirrer 60. This condition also applies to the other embodiments.

In the continuous reaction apparatus 10, it is preferable that a pipeline such as the first feed line La and the second feed line Lb for transferring a raw material and a pipeline such as the reactor line L1 for subjecting a raw material to a reaction have a shape with few bends, in other words, are arranged straight for a large part. Accordingly, pressure loss at the time of transferring the raw material can be reduced and the amount of the raw material that is being fed can be controlled with higher accuracy.

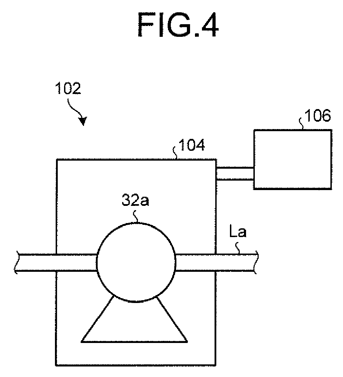

FIG. 4 is a schematic view illustrating a general structure of a modification of a metering pump. As illustrated in FIG. 4, the metering pump 32a and a portion of the first feed line La that includes its joint with the metering pump 32a are sealed together with a sealing mechanism 102. In the sealing mechanism 102, an inert gas atmosphere surrounds the metering pump 32a to air-seal the metering pump 32a. The sealing mechanism 102 has a housing 104 and an inert-gas supplying unit 106. The housing 104 is a box that accommodates the metering pump 32a and is a closed shape without communicating with the outside except through holes through which the first feed line La to which the metering pump 32a is connected is inserted. The holes through which the first feed line La is inserted are closed with a sealing material such as a resin or rubber, and therefore the housing 104 has no gap between the holes and the first feed line La. The housing 104 may have a check valve for discharging gas from inside the housing 104 to the outside. In the housing 104, the space in which the metering pump 32a is provided is hermetically sealed and therefore the metering pump 32a is cut off from the atmosphere. The inert-gas supplying unit 106 supplies an inert gas into the housing 104. The inert gas is nitrogen (N), argon (Ar), or the like.

In the continuous reaction apparatus, the metering pump 32a for transferring the raw material is hermetically sealed with the sealing mechanism 102 so that a space in which the metering pump 32a is provided is surrounded by an inert gas atmosphere, whereby the metering pump 32a can be air-sealed. At the same time, the metering pump 32a is liquid-sealed to prevent the raw material from leaking. Accordingly, in the continuous reaction apparatus having the sealing mechanism, various liquid-sealed mechanisms for transferring the raw materials can be air-sealed by such a sealing mechanism, so that the mechanisms for transferring the raw materials can be double sealed. As a result, the raw materials can be inhibited from reacting with the atmosphere and therefore the reaction can be carried out safely. Although the space in the sealing mechanism 102 in which the metering pump 32a is provided is in an inert gas atmosphere in the embodiment, the gas supplied into the housing is not limited to an inert gas. The sealing mechanism 102 is simply required to have an atmosphere filled with a gas that does not react with the raw materials, and therefore a gas other than an inert gas may also be used.

The metering pump 32a is described above in the embodiment, and the same applies to the metering pump 32b. In addition, not only the metering pumps but also various mechanisms for transferring the raw materials, such as a mass flow controller described later, preferably have a sealing mechanism as well. Accordingly, various liquid-sealed mechanisms for transferring the raw materials can be air-sealed by such a sealing mechanism, so that the mechanisms for transferring the raw materials can be double sealed. As a result, the raw materials can be inhibited from reacting with the atmosphere and therefore the reaction can be carried out safely.

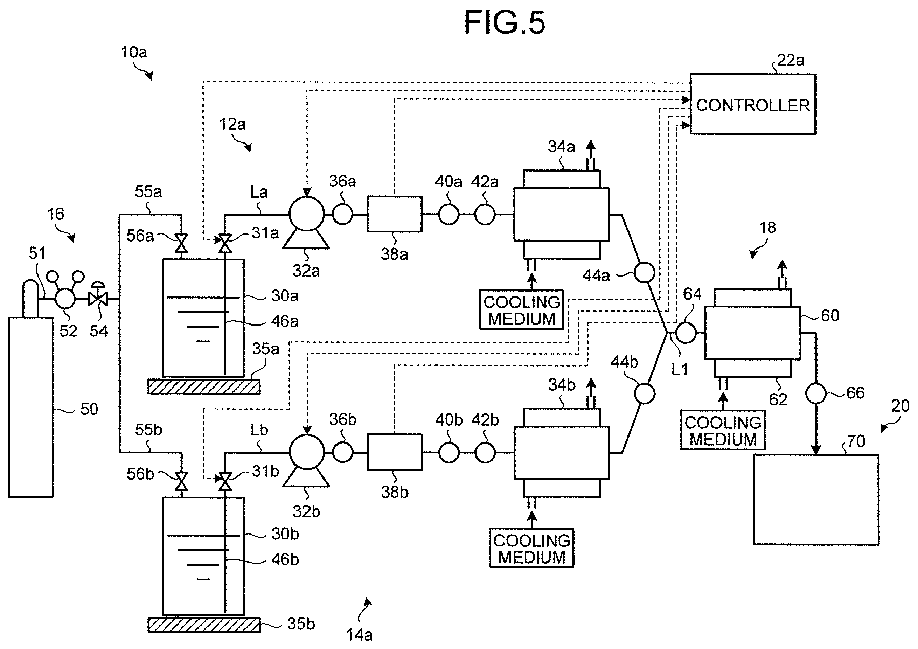

Next, referring to FIG. 5 to FIG. 8, other embodiments of the continuous reaction apparatus will be described. FIG. 5 is a schematic view illustrating a general structure of another embodiment of the continuous reaction apparatus. A continuous reaction apparatus 10a illustrated in FIG. 5 has the same configuration as the configuration of the continuous reaction apparatus 10 with some exceptions, and therefore components having the same configuration as the configuration of the continuous reaction apparatus 10 are provided with the same reference numerals as in the continuous reaction apparatus 10 and description thereof is omitted. The continuous reaction apparatus 10a has a first raw material feeding unit 12a for feeding a first raw material, a second raw material feeding unit 14a for feeding a second raw material, a pressure regulator unit 16 for supplying gas (an inert gas) to the first raw material feeding unit 12a and the second raw material feeding unit 14a to pressurize the interior of the pathways, a reactor unit 18 in which the first raw material and the second raw material are fed from the first raw material feeding unit 12a and the second raw material feeding unit 14a, respectively, and the first raw material and the second raw material thus fed are statically stirred so as to carry out a reaction to produce a compound, a recovery unit 20 for recovering the compound produced in the reactor unit 18, and a controller 22a for controlling the units.

The controller 22a of the continuous reaction apparatus 10a controls operation of a metering pump 32a and the degree of opening of a control valve 31a based on the results of measurement by a flowmeter 38a of the first raw material feeding unit 12a, by feedback control such as PID control. The controller 22a also controls operation of a metering pump 32b and the degree of opening of a control valve 31b based on the results of measurement by a flowmeter 38b of the second raw material feeding unit 14a, by feedback control such as PID control.

By controlling the operation of the units of the first raw material feeding unit 12a and the second raw material feeding unit 14a based on the results of measurement by the flowmeters 38a and 38b, the continuous reaction apparatus 10a can perform such control that results in reduction of fluctuations in flow rates. Although the control is performed based on the results of measurement by the flowmeters 38a and 38b in the embodiment, control of the units of the first raw material feeding unit 12a and the second raw material feeding unit 14a may be performed based on the results of measurement by mass meters 35a and 35b or control of the units of the first raw material feeding unit 12a and the second raw material feeding unit 14a may be performed based on the results of measurement by upstream pressure sensors 36a and 36b and downstream pressure sensors 40a and 40b. In addition, the continuous reaction apparatus 10a may control operation of the pressure regulator unit 16 based on the results of measurement.

Feedback-control performed by the controller 22a of the continuous reaction apparatus 10a is thus carried out on operation of the metering pumps 32a and 32b and the degree of opening of the control valves 31a and 31b, but this is not limited. The controller 22a may control only the rotational speeds of the metering pump 32a and the metering pump 32b. By thus controlling the flow rates via control of the rotational speeds of the metering pump 32a and the metering pump 32b, no control valve 31a or 31b is required and therefore the configuration of the apparatus can be simplified. With no control valve 31a or 31b provided, the pathways through which the first raw material and the second raw material flow can also have enhanced hermetical sealing with a simple structure. Accordingly, the pathways through which the first raw material and the second raw material flow can be made to have a low risk of gas flowing into the pathways from outside or to have a low risk of the first raw material and the second raw material flowing out of the pathways, with a simple structure. In the continuous reaction apparatus 10a, by thus controlling the flow rates only via control of the rotational speeds of the metering pump 32a and the metering pump 32b, the control valves 31a and 31b can be omitted, pressure loss caused by the control valves 31a and 31b can be avoided, and the raw materials can be transferred with high efficiency and high accuracy. Even when control of the flow rates is carried out only via control of the rotational speeds of the metering pump 32a and the metering pump 32b, the continuous reaction apparatus 10a preferably has various sensors, for example, for detecting abnormal transference of the raw materials.

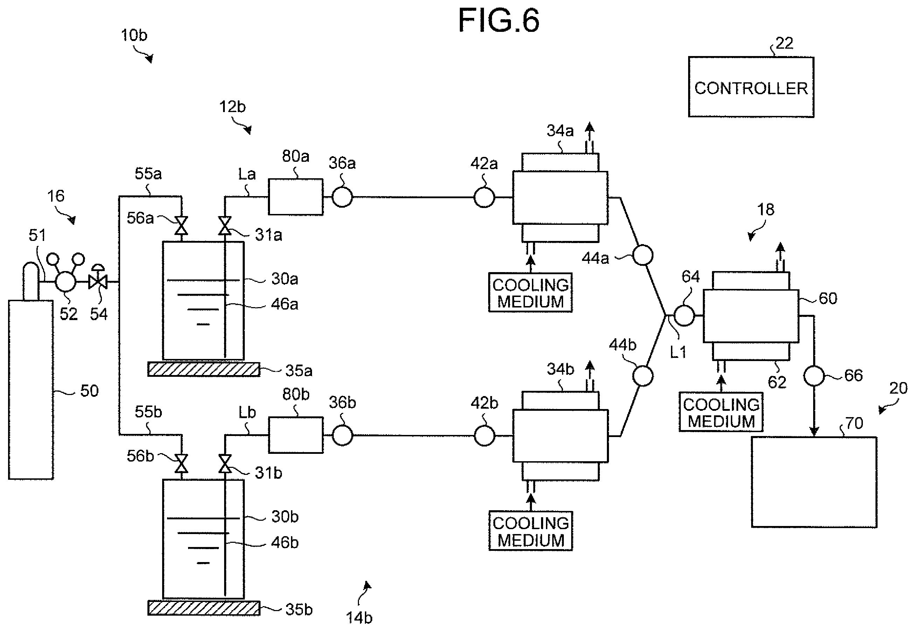

FIG. 6 is a schematic view illustrating a general structure of another embodiment of the continuous reaction apparatus. A continuous reaction apparatus 10b illustrated in FIG. 6 has the same configuration as the configuration of the continuous reaction apparatus 10 with some exceptions, and therefore components having the same configuration as the configuration of the continuous reaction apparatus 10 are provided with the same reference numerals as in the continuous reaction apparatus 10 and description thereof is omitted. The continuous reaction apparatus 10b has a first raw material feeding unit 12b for feeding a first raw material, a second raw material feeding unit 14b for feeding a second raw material, a pressure regulator unit 16 for supplying gas (an inert gas) to the first raw material feeding unit 12b and the second raw material feeding unit 14b to pressurize the interior of the pathways, a reactor unit 18 in which the first raw material and the second raw material are fed from the first raw material feeding unit 12b and the second raw material feeding unit 14b, respectively, and the first raw material and the second raw material thus fed are statically stirred so as to carry out a reaction to produce a compound, a recovery unit 20 for recovering the compound produced in the reactor unit 18, and a controller 22 for controlling the units.

The first raw material feeding unit 12b is a mechanism for storing the first raw material and feeding the first raw material into the reactor unit 18. The first raw material feeding unit 12b has a first raw material vessel 30a, a control valve 31a, a heat exchanger 34a, a mass meter 35a, an upstream pressure sensor 36a, an upstream temperature sensor 42a, a downstream temperature sensor 44a, and a flow controller 80a. The components of the first raw material feeding unit 12b are connected together via a first feed line La.

The flow controller 80a is provided on the first feed line La on the upstream side of the upstream pressure sensor 36a, that is, between the control valve 31a and the upstream pressure sensor 36a. The flow controller 80a is a liquid mass flow controller capable of accurately controlling the flow rate of the first raw material in a form of solution, and has both a mechanism for measuring the flow rate in the first feed line La at the position where the flow controller 80a is disposed and a mechanism for regulating the flow rate in the first feed line La. The flow controller 80a controls the flow rate in the first feed line La based on the results of measurement of the flow rate in the first feed line La. Accordingly, the first raw material feeding unit 12b can accurately control the flow rate of the first raw material.

The second raw material feeding unit 14b is a mechanism for storing the second raw material and feeding the second raw material into the reactor unit 18. The second raw material feeding unit 14b has a second raw material vessel 30b, a control valve 31b, a heat exchanger 34b, a mass meter 35b, an upstream pressure sensor 36b, an upstream temperature sensor 42b, a downstream temperature sensor 44b, and a flow controller 80b. The components of the second raw material feeding unit 14b are connected together via a second feed line Lb. In the second raw material feeding unit 14b, the flow controller 80b controls the flow rate of the second raw material flowing through the second feed line Lb.

In the continuous reaction apparatus 10b, with the flow controllers 80a and 80b provided instead of the metering pumps and the flowmeters, the flow rates of the first raw material and the second raw material can be controlled with high accuracy. Accordingly, in the continuous reaction apparatus 10b, with the flow controllers 80a and 80b provided instead of the metering pumps and the flowmeters, the compound can be produced with high productivity.

The two raw materials, that is, the first raw material and the second raw material, are thus subjected to stirring to produce a compound in all the embodiments above, but this configuration is not limited. In the continuous reaction apparatus, two or more raw materials can be subjected to stirring for a reaction to produce a compound. In other words, in the continuous reaction apparatus, three or more raw materials can be subjected to stirring for a reaction to produce a compound.

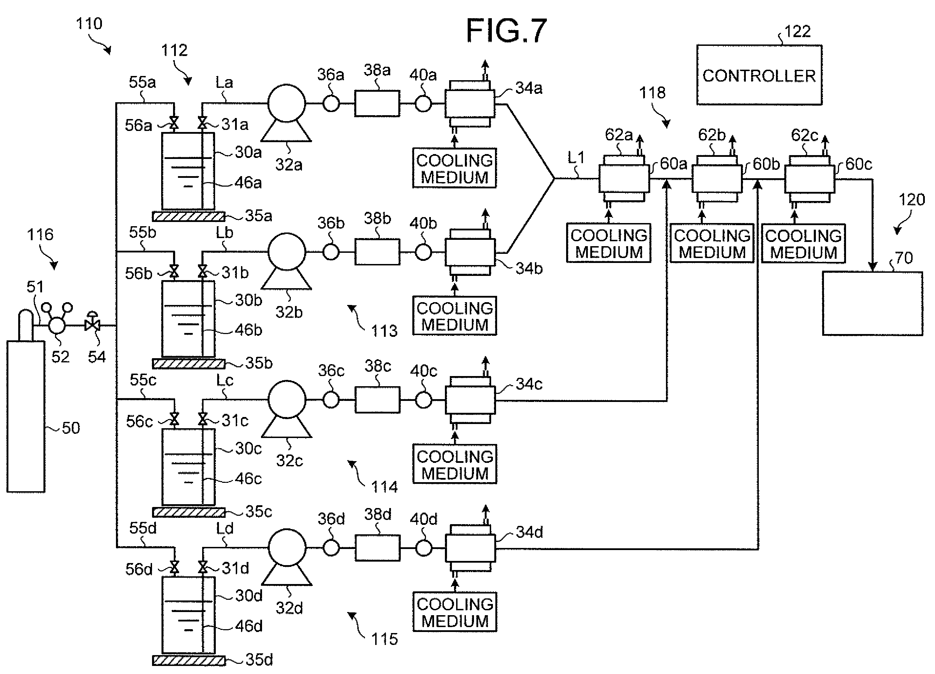

FIG. 7 is a schematic view illustrating a general structure of another embodiment of the continuous reaction apparatus. A continuous reaction apparatus 110 illustrated in FIG. 7 has the same configuration as the configuration of the continuous reaction apparatus 10 with some exceptions, and therefore components having the same configuration as the configuration of the continuous reaction apparatus 10 are provided with the same reference numerals as in the continuous reaction apparatus 10 and description thereof is omitted. The continuous reaction apparatus 110 has a first raw material feeding unit 112 for feeding a first raw material, a second raw material feeding unit 113 for feeding a second raw material, a third raw material feeding unit 114 for feeding a third raw material, a fourth raw material feeding unit 115 for feeding a fourth raw material, a pressure regulator unit 116 for supplying gas (an inert gas) to the first raw material feeding unit 112, the second raw material feeding unit 113, the third raw material feeding unit 114, and the fourth raw material feeding unit 115 to pressurize the interior of the pathways, a reactor unit 118 in which the first raw material, the second raw material, the third raw material, and the fourth raw material are fed from the first raw material feeding unit 112, the second raw material feeding unit 113, the third raw material feeding unit 114, and the fourth raw material feeding unit 115, respectively, and the first raw material, the second raw material, the third raw material, and the fourth raw material are sequentially and statically stirred thus fed so as to carry out reactions to produce a compound, a recovery unit 120 for recovering the compound produced in the reactor unit 118, and a controller 122 for controlling the units. The recovery unit 120 and the controller 122 have the same configurations as the configurations of the recovery unit 20 and the controller 22, respectively.

The configurations of the first raw material feeding unit 112, the second raw material feeding unit 113, the third raw material feeding unit 114, and the fourth raw material feeding unit 115 are the same as the configurations of the first raw material feeding unit 12 and the second raw material feeding unit 14.

The first raw material feeding unit 112 is a mechanism for storing the first raw material and feeding the first raw material into the reactor unit 118. The first raw material feeding unit 112 has a first raw material vessel 30a, a control valve 31a, a metering pump 32a, a heat exchanger 34a, a mass meter 35a, an upstream pressure sensor 36a, a flowmeter 38a, and a downstream pressure sensor 40a. The components of the first raw material feeding unit 112 are connected together via a first feed line La. The first raw material vessel 30a has a dip tube 46a inserted thereinto. The dip tube 46a is connected to the first feed line La. One end of the first feed line La is connected to the first raw material vessel 30a, while the other end of the first feed line La is connected to the reactor unit 18. The first feed line La transfers the first raw material stored in the first raw material vessel 30a to the reactor unit 118. As in the case of the first raw material feeding unit 12, the first raw material feeding unit 112 may further have an upstream temperature sensor and a downstream temperature sensor. The same applies to the other raw material feeding units.

The second raw material feeding unit 113 is a mechanism for storing the second raw material and feeding the second raw material into the reactor unit 118. The second raw material feeding unit 113 has a second raw material vessel 30b, a control valve 31b, a metering pump 32b, a heat exchanger 34b, a mass meter 35b, an upstream pressure sensor 36b, a flowmeter 38b, and a downstream pressure sensor 40b. The components of the second raw material feeding unit 113 are connected together via a second feed line Lb. The second raw material vessel 30b has a dip tube 46b inserted thereinto. The dip tube 46b is connected to the second feed line Lb.

The third raw material feeding unit 114 is a mechanism for storing the third raw material and feeding the third raw material into the reactor unit 118. The third raw material feeding unit 114 has a third raw material vessel 30c, a control valve 31c, a metering pump 32c, a heat exchanger 34c, a mass meter 35c, an upstream pressure sensor 36c, a flowmeter 38c, and a downstream pressure sensor 40c. The components of the third raw material feeding unit 114 are connected together via a third feed line Lc. The third raw material vessel 30c has a dip tube 46c inserted thereinto. The dip tube 46c is connected to the third feed line Lc. The third feed line Lc of the third raw material feeding unit 114 is connected to a reactor line L1 at a position on the downstream side of the connection of the first feed line La with the reactor line L1.

The fourth raw material feeding unit 115 is a mechanism for storing the fourth raw material and feeding the fourth raw material into the reactor unit 118. The fourth raw material feeding unit 115 has a fourth raw material vessel 30d, a control valve 31d, a metering pump 32d, a heat exchanger 34d, a mass meter 35d, an upstream pressure sensor 36d, a flowmeter 38d, and a downstream pressure sensor 40d. The components of the fourth raw material feeding unit 115 are connected together via a fourth feed line Ld. The fourth raw material vessel 30d has a dip tube 46d inserted thereinto. The dip tube 46d is connected to the fourth feed line Ld. The fourth feed line Ld of the fourth raw material feeding unit 115 is connected to the reactor line L1 at a position on the downstream side of the connection of the third feed line Lc with the reactor line L1.

The pressure regulator unit 116 supplies an inert gas to the first raw material vessel 30a, the second raw material vessel 30b, the third raw material vessel 30c, and the fourth raw material vessel 30d to pressurize the interior of the first raw material vessel 30a, the second raw material vessel 30b, the third raw material vessel 30c, and the fourth raw material vessel 30d for pressure regulation and to create an inert atmosphere in the distribution pathways of the first raw material vessel 30a, the second raw material vessel 30b, the third raw material vessel 30c, and the fourth raw material vessel 30d. The pressure regulator unit 116 has a pressurized cylinder 50, a gas supply tube 51, a reducing valve 52, branch tubes 55a, 55b, 55c, and 55d, and gas control valves 56a, 56b, 56c, and 56d.

One end of the branch tube 55c is connected to the gas supply tube 51, while the other end of the branch tube 55c is connected to the third raw material vessel 30c. The branch tube 55c supplies the inert gas supplied from the gas supply tube 51 to the third raw material vessel 30c. The gas control valve 56c is provided on the branch tube 55c, and controls the branch tube 55c between its open state and its closed state to allow or not allow the inert gas to be supplied to the third raw material vessel 30c. One end of the branch tube 55d is connected to the gas supply tube 51, while the other end of the branch tube 55d is connected to the fourth raw material vessel 30d. The branch tube 55d supplies the inert gas supplied from the gas supply tube 51 to the fourth raw material vessel 30d. The gas control valve 56d is provided on the branch tube 55d, and controls the branch tube 55d between its open state and its closed state to allow or not allow the inert gas to be supplied to the fourth raw material vessel 30d.

The reactor unit 118 stirs the first raw material fed from the first raw material feeding unit 112 and the second raw material fed from the second raw material feeding unit 113 so as to carry out a reaction to produce an intermediate compound. The reactor unit 118 stirs the intermediate compound and the third raw material fed from the third raw material feeding unit 114 so as to carry out a reaction to produce another intermediate compound. The reactor unit 118 stirs the other intermediate compound and the fourth raw material fed from the fourth raw material feeding unit 114 so as to carry out a reaction to produce a compound. The reactor unit 118 has a static stirrer 60a for stirring the first raw material and the second raw material, a static stirrer 60b for stirring the intermediate compound discharged from the static stirrer 60a and the third raw material, a static stirrer 60c for stirring the other intermediate compound discharged from the static stirrer 60b and the fourth raw material, a temperature control mechanism 62a for controlling the temperature of the static stirrer 60a, a temperature control mechanism 62b for controlling the temperature of the static stirrer 60b, and a temperature control mechanism 62c for controlling the temperature of the static stirrer 60c. The reactor unit 118 further has the reactor line L1. The reactor line L1 is connected to the first feed line La, the second feed line Lb, the third feed line Lc, the fourth feed line Ld, and the recovery unit 120. In the reactor unit 118, the static stirrer 60a, the static stirrer 60b, and the static stirrer 60c are provided on the pathway of the reactor line L1 in this order from the upstream side in the direction of the flow of the materials. The reactor line L1 is connected to the first feed line La and the second feed line Lb at positions on the upstream side of the static stirrer 60a, is connected to the third feed line Lc at a position between the static stirrer 60a and the static stirrer 60b, and is connected to the fourth feed line Ld at a position between the static stirrer 60b and the static stirrer 60c.

The static stirrer 60a, the static stirrer 60b, and the static stirrer 60c have the same configuration as the configuration of the static stirrer 60. The temperature control mechanism 62a, the temperature control mechanism 62b, and the temperature control mechanism 62c have the same configuration as the configuration of the temperature control mechanism 62.

The static stirrer 60a stirs the first raw material fed from the first raw material feeding unit 112 and the second raw material fed from the second raw material feeding unit 113 so as to carry out a reaction to produce the intermediate compound. The static stirrer 60b stirs the intermediate compound produced in the static stirrer 60a and the third raw material fed from the third raw material feeding unit 114 so as to carry out a reaction to produce the other intermediate compound. The static stirrer 60c stirs the other intermediate compound and the fourth raw material fed from the fourth raw material feeding unit 115 so as to carry out a reaction to produce the compound.

With the configurations described above and with a plurality of static stirrers, that is, the static stirrers 60a, 60b, and 60c provided in the reactor unit 118 to sequentially mix the four raw materials, the continuous reaction apparatus 110 can suitably subject two or more raw materials to continuous reactions and, as a result, can suitably produce a reaction product resulting from reactions of the raw materials. In the continuous reaction apparatus 110, all of the temperature control mechanism 62a, the temperature control mechanism 62b, and the temperature control mechanism 62c are configured to have a cooling medium circulating therein to cool the materials flowing through the static stirrers 60a, 60b, and 60c, as in the case of the temperature control mechanism 62. However, this configuration is not limited, and some of the temperature control mechanism 62a, the temperature control mechanism 62b, and the temperature control mechanism 62c may be configured to heat the materials flowing through the static stirrers 60a, 60b, and 60c. In the continuous reaction apparatus 110, the static stirrers 60a, 60b, and 60c may include a static stirrer that is equipped with no temperature control mechanism.

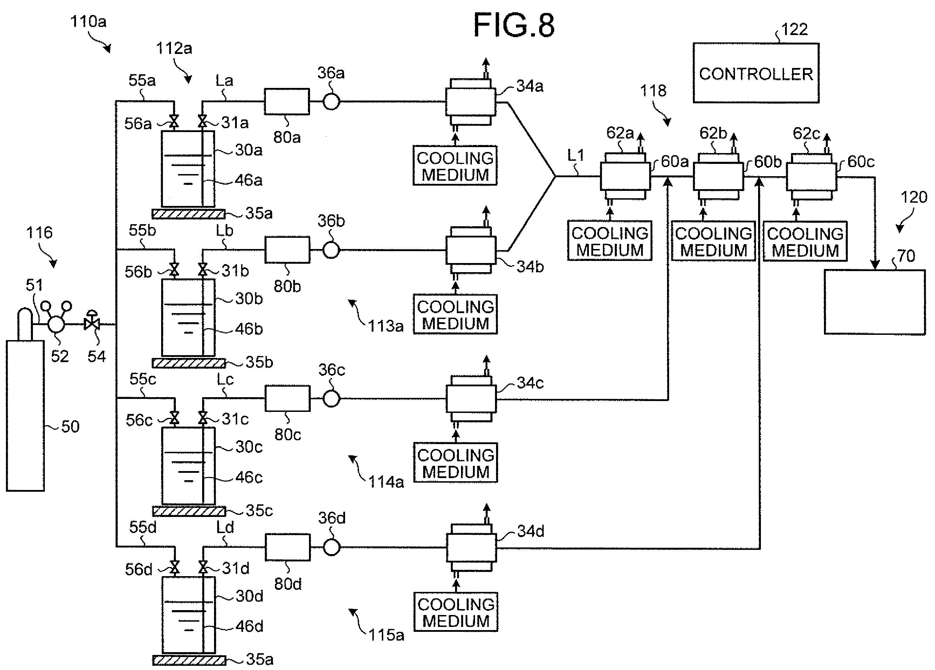

FIG. 8 is a schematic view illustrating a general structure of another embodiment of the continuous reaction apparatus. A continuous reaction apparatus 110a illustrated in FIG. 8 has the same configuration as the configuration of the continuous reaction apparatus 110 with some exceptions, and therefore components having the same configuration as the configuration of the continuous reaction apparatus 110 are provided with the same reference numerals as in the continuous reaction apparatus 110 and description thereof is omitted. The continuous reaction apparatus 110a has a first raw material feeding unit 112a for feeding a first raw material, a second raw material feeding unit 113a for feeding a second raw material, a third raw material feeding unit 114a for feeding a third raw material, a fourth raw material feeding unit 115a for feeding a fourth raw material, a pressure regulator unit 116 for supplying gas (an inert gas) to the first raw material feeding unit 112a, the second raw material feeding unit 113a, the third raw material feeding unit 114a, and the fourth raw material feeding unit 115a so as to pressurize the interior of the pathways, a reactor unit 118 in which the first raw material, the second raw material, the third raw material, and the fourth raw material are fed from the first raw material feeding unit 112a, the second raw material feeding unit 113a, the third raw material feeding unit 114a, and the fourth raw material feeding unit 115a, respectively, and the first raw material, the second raw material, the third raw material, and the fourth raw material thus fed are sequentially and statically stirred to carry out reactions to produce a compound, a recovery unit 120 for recovering the compound produced in the reactor unit 118, and a controller 122 for controlling the units.

As in the cases of the first raw material feeding unit 12b and the second raw material feeding unit 14b, the first raw material feeding unit 112a, the second raw material feeding unit 113a, the third raw material feeding unit 114a, and the fourth raw material feeding unit 115a have flow controllers 80a, 80b, 80c, and 80d, respectively, instead of the metering pumps and the flowmeters.

By controlling flow rates with the flow controllers 80a, 80b, 80c, and 80d as in the case of the continuous reaction apparatus 10b, the continuous reaction apparatus 110a can produce a compound with high productivity as in the case of the continuous reaction apparatus 110. Even when three or more raw materials are subjected to reactions, the continuous reaction apparatus 110a can produce a compound with high productivity as in the case of the continuous reaction apparatus 110 by providing feedback regarding flow rates that are obtained based on various results of measurement.

The continuous reaction apparatus described above uses liquid raw materials as raw materials to be subjected to reactions, but this configuration is not limited. In the continuous reaction apparatus, one of the raw materials may be solid. The solid raw material is preferably transported, for example, through the use of a combination of a microdischarger and an ejector manufactured by Yoshikawa Corporation. The amount of the solid raw material transported by the micro-discharger is preferably not lower than 0.1 ml per minute and not higher than 1,600 ml per minute (that is, not lower than 0.1 ml/min and not higher than 1,600 ml/min) and is preferably not lower than 0.5 and not higher than 160 ml per minute (that is, not lower than 0.5 ml/min and not higher than 160 ml/min). Particles in the solid raw material are preferably fine. Specifically, the size of the particles in the solid raw material is preferably not smaller than 0.001 mm and not larger than 5 mm and is more preferably not smaller than 0.01 mm and not larger than 0.5 mm. In the continuous reaction apparatus, the solid raw material discharged from the micro-discharger is mixed with and dispersed in a solvent (liquid) in the ejector, and the resulting suspension is transported using a metering pump to a heat exchanger. The amount of the solvent fed into the ejector is preferably not lower than 200 ml per minute and not higher than 2,000 ml per minute (that is, not lower than 200 ml/min and not higher than 2,000 ml/min). The embodiments described above adopt a configuration in which the first raw material and the second raw material are subjected to a reaction while cooled by various heat exchangers, but this configuration is not limited. The continuous reaction apparatus may adopt a configuration in which the first raw material and the second raw material pass through heat exchangers before being subjected to a reaction in the reactor unit.

With the configurations described above, the continuous reaction apparatuses 10, 10a, 10b, 110, and 110a can suitably stir two or more raw materials, subject these raw materials to a reaction or reactions, and produce a compound. Specifically, a continuous reaction or continuous reactions are carried out using a static-stirring device or static-stirring devices, which is what is called a static mixer, with the flow rates and the temperatures of solutions containing these two or more raw materials at the time of introduction being accurately controlled and the moisture content and the oxygen level in a reaction system being exceptionally lowered to create an inert atmosphere, and, as a result, various compounds can be produced with high productivity.

In the field of electronic materials and in the field of advanced organic materials, such as synthetic rubber, adhesives, and medical materials, obtained by the self-composing technology, much attention is being paid to prominent features of polymers obtained by polymerization (reaction) by the living anionic polymerization method. The continuous reaction apparatuses 10, 10a, 10b, 110, and 110a are a continuous polymerization apparatus capable of carrying out living polymerization, and can subject one or more raw material polymers and a polymerization initiator as raw materials to polymerization, to mass-produce a polymer by polymerization by the living anionic polymerization method at low cost and with high productivity.

Much attention is also being paid to technical development using diblock and triblock copolymers. And, practical industrial use is desired to be achieved for techniques such as application of technology that uses self-composing characteristics typical of the block copolymers to fabrication of dot patterns and line patterns and application of these resulting patterns to fine patterning for the purpose of enhancing packaging densities of magnetic discs and enhancing integration of semiconductor integrated circuits. Furthermore, use of amphiphilic block copolymers in the field of medical care and also use of the amphiphilic block copolymers in development of, among others, electrolyte membranes in solid polymer fuel cells, adhesives with high added value, and synthetic rubber are expected. The continuous reaction apparatuses 10, 10a, 10b, 110, and 110a are a continuous polymerization apparatus capable of carrying out living anionic polymerization, and can subject two or more raw material polymers and a polymerization initiator as raw materials to polymerization (reaction, synthesis) so as to mass-produce a block copolymer at low cost and with high productivity.

Next, an embodiment of a method of continuous polymerization using the continuous reaction apparatuses 10, 10a, and 10b described above will be described. The method of continuous polymerization includes a step of continuously feeding the first raw material and the second raw material into the reactor unit 18 while regulating the amount and the temperature of the first raw material that is being fed from the first raw material feeding unit 12 into the reactor unit 18 and the amount and the temperature of the second raw material that is being fed from the second raw material feeding unit 14 into the reactor unit 18, and a step of stirring the first raw material and the second raw material thus fed into the reactor unit 18 by using the static stirrer 60 while performing temperature control, and discharging the resulting reaction product downstream from the static stirrer 60.

First, the control valves 31a and 31b are opened, and the first raw material and the second raw material stored in the first raw material vessel 30a and the second raw material vessel 30b flow through the dip tubes 46a and 46b into the first feed line La and the second feed line Lb. The amounts of the first raw material and the second raw material that have flowed into the first feed line La and the second feed line Lb are measured with the mass meters 35a and 35b as decrements in the masses of the first raw material vessel 30a and the second raw material vessel 30b. Based on the decrements thus measured in the masses of the first raw material vessel 30a and the second raw material vessel 30b, the controller 22 regulates the amounts of the first raw material and the second raw material that are being fed.

The first raw material and the second raw material that have flowed into the first feed line La and the second feed line Lb are transferred using the metering pumps 32a and 32b through the flowmeters 38a and 38b and the heat exchangers 34a and 34b toward the reactor unit 18. At this time, the flowmeters 38a and 38b measure the flow rates of the first raw material and the second raw material, while the upstream pressure sensors 36a and 36b and the downstream pressure sensors 40a and 40b measure the pressures of the first raw material and the second raw material in the first feed line La and the second feed line Lb at positions on the upstream side and the downstream side of the flowmeters 38a and 38b. Based on the pressures thus measured of the first raw material and the second raw material, the controller 22 regulates the amounts of the first raw material and the second raw material that are being fed.

After transferred to the heat exchangers 34a and 34b, the first raw material and the second raw material exchange heat with heating mediums (cooling mediums, for example) in the heat exchangers 34a and 34b and, as a result, the temperatures of the first raw material and the second raw material are desirably adjusted for feeding. At this time, the temperatures of the first raw material and the second raw material at positions on the upstream side and the downstream side of the heat exchangers 34a and 34b are measured with the upstream temperature sensors 42a and 42b and the downstream temperature sensors 44a and 44b provided on the upstream side and the downstream side of the heat exchangers 34a and 34b. Based on the temperatures of the first raw material and the second raw material thus measured with the downstream temperature sensors 44a and 44b, the controller 22 regulates the temperatures of the first raw material and the second raw material that are being fed into the reactor unit 18. In addition, the controller 22 regulates the temperatures of the heating mediums in the heat exchangers 34a and 34b based on the temperatures of the first raw material and the second raw material measured with the upstream temperature sensors 42a and 42b, and also regulates the amounts of the first raw material and the second raw material that are being fed so that the first raw material and the second raw material after heat exchange have desired temperatures.

After heat exchange by the heat exchangers 34a and 34b, the first raw material and the second raw material are transferred through the reactor line L1 to the static stirrer 60. At this time, the first raw material and the second raw material having the temperatures thus desirably regulated are statically stirred and, as a result, a reaction product of the first raw material and the second raw material is produced. The resulting reaction product is recovered in the recovery vessel 70. The temperatures of the first raw material and the second raw material that are being fed into the static stirrer 60 are measured with the upstream temperature sensor 64, while the temperature of the reaction product is measured with the downstream temperature sensor 66. With the temperature control mechanism 62 provided on the static stirrer 60, the controller 22 controls the temperature in the static stirrer 60 so that the temperature falls within a desired temperature range. The controller 22 also controls the amounts and the temperatures of the first raw material and the second raw material that are being fed into the static stirrer 60 so that the temperature in the static stirrer 60 falls within a desired temperature range. In the continuous reaction apparatus 10b, with the flow controllers 80a and 80b provided instead of the metering pumps 32a and 32b and the flowmeters 38a and 38b, the amounts of the first raw material and the second raw material that are being fed are regulated.

As described above, by the method of continuous polymerization according to the embodiment in which the controller 22 controls the amounts and the temperatures of the first raw material and the second raw material that are being fed into the reactor unit 18, the temperature at which the first raw material and the second raw material undergo a reaction can be precisely controlled, among others. In addition, because the first raw material and the second raw material stored in the first raw material vessel 30a and the second raw material vessel 30b are continuously fed through the first feed line La and the second feed line Lb and then through the reactor line L1 into the static stirrer 60, contact of the first raw material and the second raw material with the atmosphere can be prevented. As a result, the reaction product can be obtained with high productivity.

Next, an embodiment of a method of continuous polymerization using the continuous reaction apparatuses 110 and 110a described above will be described. The method of continuous polymerization includes a step of continuously feeding the first raw material and the second raw material into the reactor unit 118 while regulating the amount and the temperature of the first raw material that is being fed from the first raw material feeding unit 30a into the reactor unit 118 and the amount and the temperature of the second raw material that is being fed from the second raw material feeding unit 30b into the reactor unit 118, a step of stirring the first raw material and the second raw material thus fed into the reactor unit 118 by using the static stirrer 60a while performing temperature control, and discharging the resulting reaction product downstream from the static stirrer 60a, and a step of performing at least one round of a series of operation, the series of operation including continuously feeding the other raw materials into the reactor unit 118 while regulating the amounts and the temperatures of the other raw materials that are being fed from the other raw material feeding units 30c and 30d into the reactor unit 118, stirring the reaction product discharged downstream from the static stirrer 60a with the other raw materials by using the static stirrers 60b and 60c while performing temperature control, and discharging the resulting reaction product downstream from the static stirrers 60b and 60c.

First, as in the method of continuous polymerization using the continuous reaction apparatuses 10, 10a, and 10b, the first raw material and the second raw material are fed into the static stirrer 60a and, as a result, a reaction product of the first raw material and the second raw material is produced. Production of the reaction product is controlled by the controller 122. For convenience of description, description of the upstream temperature sensors 42a and 42b and the downstream temperature sensors 44a and 44b is omitted in this embodiment.

The control valve 31c is opened, and the third raw material stored in the third raw material vessel 30c flows through the dip tube 46c into the third feed line Lc. The amount of the third raw material that has flowed into the third feed line Lc is measured with the mass meter 35c as decrements in the mass of the third raw material vessel 30c. Based on the decrements thus measured in the mass of the third raw material vessel 30c, the controller 122 regulates the amounts of the first raw material and the second raw material that are being fed.

The third raw material that has flowed into the third feed line Lc is transferred using the metering pump 32c through the flowmeter 38c and the heat exchanger 34c toward the reactor unit 118. At this time, the flowmeter 38c measures the flow rate of the third raw material, while the upstream pressure sensor 36c and the downstream pressure sensor 40c, respectively, measure the pressures of the third raw material in the third feed line Lc at positions on the upstream side and the downstream side of the flowmeter 38c. Based on the pressures thus measured of the third raw material, the controller 122 regulates the amount of the third raw material that is being fed.

After transferred to the heat exchanger 34c, the third raw material exchanges heat with the heating medium (the cooling medium, for example) in the heat exchanger 34c and, as a result, the temperature of the third raw material is desirably adjusted for feeding. In addition, the controller 122 regulates the temperature of the heating medium in the heat exchanger 34c, and also regulates the amount of the third raw material that is being fed so that the third raw material after heat exchange has a desired temperature.

After heat exchange by the heat exchanger 34c, the first raw material and the second raw material are transferred through the reactor line L1 to the static stirrer 60b. At this time, the third raw material having the temperature thus desirably regulated is statically stirred with the reaction product of the first raw material and the second raw material and, as a result, a reaction product of the first raw material and the second raw material with the third raw material is produced. The resulting reaction product is discharged toward the static stirrer 60c provided on the downstream side of the reactor line L1. With the temperature control mechanism 62b provided on the static stirrer 60b, the controller 122 controls the temperature in the static stirrer 60b so that the temperature falls within a desired temperature range. The controller 122 also controls the amount and the temperature of the third raw material that is being fed into the static stirrer 60b so that the temperature in the static stirrer 60b falls within a desired temperature range. In the continuous reaction apparatus 110a, with the flow controller 80c provided instead of the metering pump 32c, the amount of the third raw material that is being fed is regulated.

The control valve 31d is opened, and the fourth raw material stored in the fourth raw material vessel 30d flows through the dip tube 46d into the fourth feed line Ld. The amount of the fourth raw material that has flowed into the fourth feed line Ld is measured with the mass meter 35d as decrements in the mass of the fourth raw material vessel 30d. Based on the decrements thus measured in the mass of the fourth raw material vessel 30d, the controller 122 regulates the amounts of the first raw material and the second raw material that are being fed.

The fourth raw material that has flowed into the fourth feed line Ld is transferred using the metering pump 32d through the flowmeter 38d and the heat exchanger 34d toward the reactor unit 118. At this time, the flowmeter 38d measures the flow rate of the third raw material, while the upstream pressure sensor 36d and the downstream pressure sensor 40d, respectively, measure the pressures of the fourth raw material in the fourth feed line Ld at positions on the upstream side and the downstream side of the flowmeter 38d. Based on the pressures thus measured of the fourth raw material, the controller 122 regulates the amount of the fourth raw material that is being fed.

After transferred to the heat exchanger 34d, the fourth raw material exchanges heat with the heating medium (the cooling medium, for example) in the heat exchanger 34d and, as a result, the temperature of the fourth raw material is desirably adjusted for feeding. In addition, the controller 122 regulates the temperature of the heating medium in the heat exchanger 34c, and also regulates the amounts of the first raw material and the second raw material that are being fed so that the fourth raw material after heat exchange has a desired temperature.

After heat exchange by the heat exchanger 34c, the fourth raw material is transferred through the reactor line L1 to the static stirrer 60c. At this time, the fourth raw material having the temperature thus desirably regulated is statically stirred with the reaction product of the first raw material, the second raw material, and the third raw material and, as a result, a reaction product of the reaction product of the first raw material, the second raw material, and the third raw material with the fourth raw material is produced. The resulting reaction product is discharged from the static stirrer 60c toward the recovery unit 120. With the temperature control mechanism 62c provided on the static stirrer 60c, the controller 122 controls the temperature in the static stirrer 60c so that the temperature falls within a desired temperature range. The controller 122 also controls the amount and the temperature of the fourth raw material that is being fed into the static stirrer 60c so that the temperature in the static stirrer 60c falls within a desired temperature range. In the continuous reaction apparatus 110a, with the flow controllers 80c and 80d provided instead of the metering pumps 32c and 32d, the amounts of the third raw material and the fourth raw material that are being fed are regulated.

As described above, by the method of continuous polymerization according to the embodiment in which the controller 122 controls the amounts and the temperatures of the first raw material to the fourth raw material that are being fed into the reactor unit 118, the temperature at which the first raw material to the fourth raw material undergo reactions can be precisely controlled, among others. In addition, because the first raw material to the fourth raw material stored in the first raw material vessel 30a to the fourth raw material vessel 30d are continuously fed through the first to the fourth feed lines, that is, the first feed line La to the fourth feed line Ld, and then through the reactor line L1 into the static stirrers 60a to 60c, contact of the first raw material to the fourth raw material with the atmosphere can be prevented. As a result, the reaction product can be obtained with high productivity.

In the following, a compound that can be produced in the continuous reaction apparatuses 10, 10a, 10b, 110, and 110a (hereinafter, simply called the continuous reaction apparatus), that is, a reaction product, will be exemplified. When raw materials in the following examples are subjected to a reaction and/or when a reaction product in the following examples is produced, although the continuous reaction apparatus 10 preferably controls the temperatures and the flow rates of the raw materials fed into each static stirrer (each reactor unit) so as to suitably carry out the reaction of the raw materials, the continuous reaction apparatus 10 is simply required to continuously feed the raw materials into the static stirrer, carry out a continuous reaction, and discharge a reaction product. The mechanism for feeding the raw materials into the static stirrer is not limited to the mechanisms in the embodiments described above.

First, a polymer compound produced by continuous living anionic polymerization in the continuous reaction apparatus will be described. When producing the polymer compound by continuous living anionic polymerization in the continuous reaction apparatus, one or more types of raw material monomer solutions and a polymerization initiator solution as raw materials are fed and stirred to carry out a polymerization reaction (a synthesis reaction) to produce the polymer compound. In the continuous living anionic polymerization reaction that is carried out with the use of the static stirrer under a highly-pure inert gas atmosphere that has been created in the apparatus by lowering the moisture content and the oxygen level in the reaction system to exceptionally low levels and then performing vacuum drying, the continuous reaction apparatus can measure the flow rates of the one or more types of raw material monomer solutions and the polymerization initiator solution at the time of introduction to control the flow rates, for example, to control the range of fluctuations in the flow rates not to exceed ±1%, and can also control the temperatures at the time of introduction and the temperature during polymerization. As a result, the continuous reaction apparatus can produce the polymer compound by continuous living anionic polymerization with high productivity.

Control of the flow rates of the raw material monomers and the initiator will be described. It is possible, by the method described in Patent Document 8, to carry out polymerization only through pressure feeding of monomer solutions and an initiator solution from an argon gas cylinder after concentration adjustment, with the flow rates being adjusted as calculated from the flow rate of the solvent alone measured in advance. In practice, however, the flow rate of the solvent alone is different from any of the flow rates of the raw material solutions and the initiator solution after adjustment even when the pressure of argon gas is set as the same pressure, and therefore the flow rates thus set and the values thus calculated are different from the actual flow rates. In addition, pressure in the reaction system that includes the static stirrer also varies. Because of these reasons, it is difficult to control the range of fluctuations in the flow rates of the raw materials and the initiator not to exceed ±1%. As a result, the molecular weight (Mw) of the resulting polymer compound deviates by ±10% or more from the target value, and the degree of distribution is as high as 1.2 (Mw/Mn) or higher. In addition, in terms of reproducibility in polymerization, the molecular weight and the degree of distribution vary by polymerization batch. Therefore, it is difficult to use feeding means of the apparatus described in Patent Document 11 as an apparatus for use in commercial mass production.

On the other hand, the continuous reaction apparatus according to the embodiments described above can measure the actual flow rates of the raw material monomers and the initiator solution when introduced into the static stirrer and, based on the results of preliminary adjustment of actual flow rates performed before polymerization, can also set the flow rates for actual polymerization. The continuous reaction apparatus also has a flange pump, preferably a triple plunger pump, as the metering pump disposed at each raw material feeding unit (each feeding line). During operation, the continuous reaction apparatus can make fine adjustments on the flow rates by measurement with the flowmeter, whenever necessary.

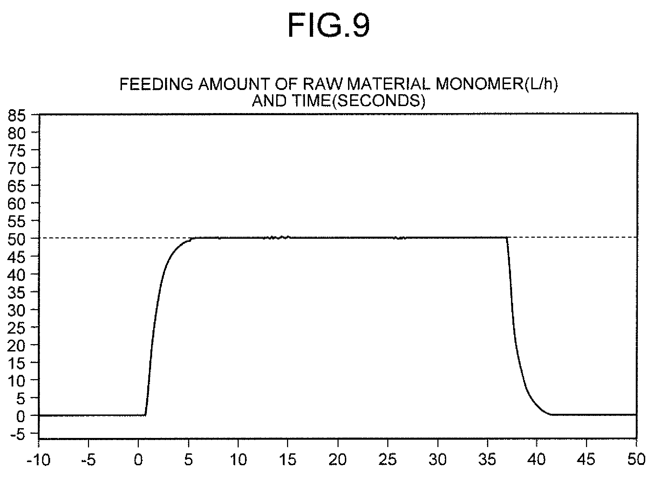

FIG. 9 is a descriptive view for describing operation of the continuous reaction apparatus. As illustrated in FIG. 9, the continuous reaction apparatus according to the embodiments described above can feed a raw material (a solution of a raw material monomer) at a predetermined flow rate stably with small fluctuations, and therefore can have a dramatically improved ability of flow rate control compared to a conventional method. In the continuous reaction apparatus according to the embodiments described above, the range of fluctuations in the flow rate of each raw material monomer is preferably controlled not to exceed ±1% and is more preferably controlled not to exceed ±0.5%.

In the continuous reaction apparatus, the total amount of the raw material monomer solution fed into the static stirrer per unit time is preferably not lower than 20 L/h and not higher than 200 L/h and is more preferably not lower than 30 L/h and 100 L/h. When the amount of the raw material monomer solution fed per unit time is not lower than 20 L, productivity per unit time can be increased, while when the amount of the raw material monomer solution fed per unit time is not higher than 200 L/h, the load on the apparatus can be reduced and therefore failure can be inhibited. The optimum feeding amount varies depending on the diameter of piping of the static stirrer, and therefore the continuous reaction apparatus is preferably optimized as needed.

In the continuous reaction apparatus, the optimum number of mixing elements of the static stirrer varies depending on the viscosity of the reaction mixture. Usually, the Reynolds number in the reaction field in a static stirrer having a various number of elements (Re = **ρ**vD_{H}/**µ**: Re = the Reynolds number, ρ = fluid density (g/cm³), v = flow speed in mixer piping (cm/s), D_{H} = inner diameter of mixer piping (cm), **µ** = solution viscosity (g/cm³)) is preferably 100 to 500. On the other hand, in the continuous reaction apparatus, reaction efficiency in continuous polymerization is excellent even when the Reynolds number is 1 to 300, and such reaction efficiency is thought to be obtained when polymerization is carried out at a high reaction rate under accurate control of the flow speeds and the reaction temperature. When the Reynolds number is not smaller than 20 and not greater than 300, the continuous reaction apparatus can give higher reaction efficiency.

In the continuous reaction apparatus, in terms of control of the temperatures of each raw material monomer and the polymerization initiator at the time of introduction and the temperature during polymerization, by performing preliminary temperature adjustment for each line at the time of feeding from a bath for temperature adjustment and before introduction into the static stirrer and then measuring each temperature after temperature adjustment, fine temperature adjustments can be performed. In addition, temperatures between the static stirrers connected to each other and temperatures after discharged from the static stirrers can also be monitored and controlled. In the continuous reaction apparatus, a change in temperature before and after polymerization is preferably controlled to fall within a range of ±10°C and is more preferably controlled to fall within a range of ±5°C.

Examples of a polymerization solvent used in the present invention include ether solvents, particularly diethyl ether, dipropyl ether, diisopropyl ether, dibutyl ether, methyl-t-butyl ether, methylcyclopentyl ether, tetrahydrofuran, furfurylmethyl ether, crown ethers, diethylene glycol dimethyl ether, triethylene glycol dimethyl ether, and 1,4-dioxane. As a nonpolar solvent, cyclopentane, cyclohexane, methylcyclohexane, benzene, toluene, and xylene are exemplified. As the polymerization solvent, a mixture of two or more of these may also be used. The scope of the present invention is not limited to these solvents.

Examples of the polymerization initiator used in living anionic polymerization include alkyllithium reagents, particularly methyllithium, n-butyllithium, s-butyllithium, t-butyllithium, naphthalene-lithium, triphenylmethyllithium, phenyllithium, benzyllithium, 1,4-dilithiobutane, and 1,4-dilithio-1,1,4,4-tetraphenylbutane. In addition, alkylsodium reagents, particularly naphthalene-sodium and triphenylmethylsodium can be preferably exemplified. Furthermore, depending on the reactivity of the monomer used in polymerization, lithium methoxide, sodium methoxide, potassium methoxide, lithium ethoxide, sodium ethoxide, potassium ethoxide, and sodium isopropoxide can also be exemplified. However, the polymerization initiator used in living anionic polymerization is not limited to these.

Next, the raw material monomer will be described in detail. As the raw material monomer, a styrene-based monomer of the following formula is preferably exemplified. 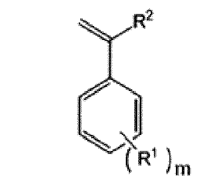 (In the formula, R¹ is a C₁₋₁₀ alkyl group, a C₁₋₁₀ alkoxy group, a trialkylsilyloxy group, an alkoxyalkyl group, a C₁₋₁₀ alkoxycarbonyl group, a C₁₋₁₀ alkoxy carbonyloxy group, or a halogen atom, R² is a hydrogen atom or a methyl group, and m is an integer of 0 to 5.)

In R¹, a t-butyloxy group and an ethoxyethoxy group are exemplified as a protector of a hydroxy group. In addition, a hydrogen atom, a methoxy group, an ethoxy group, a fluorine atom, a chlorine atom, and a bromine atom can be exemplified.

Preferable examples of the raw material monomer include an acrylic acid ester monomer of the following formula. Styrene-based monomers are preferably exemplified. 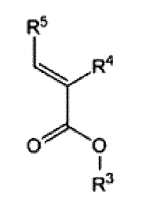 (In the formula, R³ is a hydrogen atom, a C₁₋₃₀ alkyl group, a trialkylsilyl group, or an alkoxyalkyl group, and R⁴ and R⁵ are independently a hydrogen atom, a methyl group, a cyano group, an alkoxycarbonyl group, or a trialkylsilyl group.)

Preferably, R⁴ and R⁵ are independently a hydrogen atom or a methyl group. Examples of R³ include a methyl group, an ethyl group, and a trimethylsilyl group. As a protector for acrylic acid and crotonic acid, a t-butyl group and an ethoxyethyl group are preferably exemplified.

Examples of the raw material monomer include a butadiene monomer of the following formula. 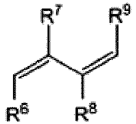 (In the formula, R⁶, R⁷, R⁸, and R⁹ are independently a hydrogen atom or a C₁₋₁₀ alkyl group.)

Preferably, R⁶, R⁷, R⁸, and R⁹ are independently a hydrogen atom or a methyl group. Specifically, 1,3-butadiene, isoprene, 2-ethyl-1,3-butadiene, 2,3-dimethyl-1,3-butadiene, and 1,3-pentadiene are preferably exemplified.

Preferable examples of the raw material monomer include an acrylic monomer of the following formula. 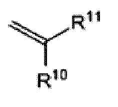 (In the formula, R¹⁰ and R¹¹ are independently a hydrogen atom, a C₁₋₁₀ alkyl group, a cyano group, or an alkoxycarbonyl group.)

Acrylonitrile, dicyanovinyl, dimethoxycarbonylvinyl, and the like are particularly preferable. These monomers specifically exemplified above, however, do not limit the scope of the present invention.

Next, the block copolymer produced by continuous living anionic polymerization in the continuous reaction apparatus will be described. When producing the block copolymer by continuous living anionic polymerization in the continuous reaction apparatus, two or more raw material monomer solutions and a polymerization initiator solution as raw materials are fed and sequentially stirred to carry out a polymerization reaction (a synthesis reaction) to produce the block copolymer. In the continuous living anionic polymerization reaction that is carried out with the use of the static-stirring device under a highly-pure inert gas atmosphere that has been created in the apparatus by lowering the moisture content and the oxygen level in the reaction system to exceptionally low levels and then performing vacuum drying, the continuous reaction apparatus can measure the flow rates of the two or more raw material monomer solutions and the polymerization initiator solution at the time of introduction to control the flow rates, for example, to control the range of fluctuations in the flow rates not to exceed ±2%, and can also control the temperatures at the time of introduction and the temperature during polymerization. As a result, the continuous reaction apparatus can produce the block copolymer by continuous living anionic polymerization with high productivity. Control of the flow rates of the raw material monomers and the initiator is performed as in the case of the polymer compound described above. The polymerization solvent used, the polymerization initiator used, and the raw material monomers used are also the same as in the case of the polymer compound described above. Examples

The present invention will be specifically described by synthesis examples (polymerization examples) and comparative synthesis examples (comparative polymerization examples). The scope of the present invention, however, is not limited to these examples of synthesis.

First, Synthesis Example 1 to Synthesis Example 6 and Comparative Synthesis Example 1 to Comparative Synthesis Example 4 are provided to describe examples of polymer synthesis. Although these synthesis examples and comparative synthesis examples are provided to specifically describe the present invention, the scope of the present invention is not limited to the following examples of synthesis.

### [Synthesis Example 1]

### (Preparation of raw material reagent)

In order to reduce the moisture content in tetrahydrofuran (THF) to be used, dehydration and purification were performed using CaH₂. A styrene monomer was subjected to a dehydration reaction using sodium. The resulting styrene monomer was diluted with the purified THF solution to give a 0.96-N solution. Separately, commercially available s-butyllithium and the purified THF solution were used to prepare a 0.01-N solution.

### (Continuous polymerization)

First, the entire system in an apparatus was vacuum dried for carrying out a reaction in a high purity argon atmosphere. Then, each of the styrene monomer/THF solution and the s-butyllithium solution prepared above was transferred into a pressure vessel, and two triple plunger pumps were used to perform feeding into a static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, the maximum percentage of fluctuations in the flow rates was 0.3%. The temperatures of both of the raw material solutions were controlled to -40°C to -30°C, and the continuous reaction was allowed to proceed for 10 hours.

### (Additional operation)

The resulting polymerization solution was fed into a distillation vessel in the apparatus, and polymerization was terminated with methanol. The THF solution was subjected to continuous distillation at normal pressure for removal of excessive solvent and, as a result, the concentration of the polymerization solution became approximately 0.65 kg/L. Spray drying was performed to give 17.3 kg of polystyrene. The yield was 96%. The resulting polystyrene had a molecular weight (Mw) of 10,200 and a degree of distribution (Mw/Mn) of 1.04.

### [Synthesis Example 2]

### (Preparation of raw material reagent)

In order to reduce the moisture content in tetrahydrofuran (THF) to be used, dehydration and purification were performed using CaH₂. A t-butoxystyrene monomer was subjected to a dehydration reaction using sodium. The resulting t-butoxystyrene monomer was diluted with the purified THF solution to give a 0.567-N solution. Separately, commercially available s-butyllithium and the purified THF solution were used to prepare a 0.01-N solution.

### (Continuous polymerization)

First, the entire system in the apparatus was vacuum dried for carrying out a reaction in a high purity argon atmosphere. Each of the t-butoxystyrene monomer/THF solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, the maximum percentage of fluctuations in the flow rates was 0.5%. The temperatures of both of the raw material solutions were controlled to -30°C to -20°C, and the continuous reaction was allowed to proceed for 10 hours.

### (Additional operation)

The resulting polymerization solution was fed into the distillation vessel in the apparatus, and polymerization was terminated with methanol. The THF solution was subjected to continuous distillation at normal pressure for removal of excessive solvent and, as a result, the concentration of the polymerization solution became approximately 0.65 kg/L. Spray drying was performed to give 16.9 kg of poly t-butoxystyrene. The yield was 94%. The resulting poly t-butoxystyrene had a molecular weight (Mw) of 9,900 and a degree of distribution (Mw/Mn) of 1.03.

### [Synthesis Example 3]

### (Preparation of raw material reagent)

In order to reduce the moisture content in tetrahydrofuran (THF) to be used, dehydration and purification were performed using CaH₂. Methyl methacrylate was subjected to a dehydration reaction using sodium. The resulting methyl methacrylate monomer was diluted with the purified THF solution to give a 1.0-N solution. Separately, commercially available triphenylmethylsodium and the purified THF solution were used to prepare a 0.01-N solution.

### (Continuous polymerization)

First, the entire system in the apparatus was vacuum dried for carrying out a reaction in a high purity argon atmosphere. Then, each of the methyl methacrylate monomer/THF solution and the triphenylmethylsodium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, the maximum percentage of fluctuations in the flow rates was 0.5%. The temperatures of both of the raw material solutions were controlled to -10°C to -0°C, and the continuous reaction was allowed to proceed for 10 hours.

### (Additional operation)

The resulting polymerization solution was fed into the distillation vessel in the apparatus, and polymerization was terminated with methanol. The THF solution was subjected to continuous distillation at normal pressure for removal of excessive solvent and, as a result, the concentration of the polymerization solution became approximately 0.7 kg/L. Spray drying was performed to give 16.6 kg of polymethyl methacrylate. The yield was 92%. The resulting polymethyl methacrylate had a molecular weight (Mw) of 10,100 and a degree of distribution (Mw/Mn) of 1.04.

### [Synthesis Example 4]

### (Preparation of raw material reagent)

In order to reduce the moisture content in hexane to be used, dehydration and purification were performed using CaH₂. A 4.62-N 1,3-butadiene/hexane solution was prepared under a low temperature and a dehydration state. Separately, commercially available s-butyllithium and the purified THF solution were used to prepare a 0.025-N solution.

### (Continuous polymerization)

First, the entire system in the apparatus was vacuum dried for carrying out a reaction in a high purity argon atmosphere. Then, each of the 1,3-butadiene/hexane solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, the maximum percentage of fluctuations in the flow rates was 0.5%. The temperatures of both of the raw material solutions were controlled to 10°C to 20°C, and the continuous reaction was allowed to proceed for 10 hours.

### (Additional operation)

The resulting polymerization solution was fed into the distillation vessel in the apparatus, and polymerization was terminated with methanol. The THF/hexane solution was subjected to continuous distillation at normal pressure for removal of excessive solvent and, as a result, the concentration of the polymerization solution became approximately 0.55 kg/L. Spray drying was performed to give 34.6 kg of polybutadiene rubber. The yield was 81%. The resulting polybutadiene rubber had a molecular weight (Mw) of 9,600 and a degree of distribution (Mw/Mn) of 1.07.

### [Synthesis Example 5]

### (Preparation of raw material reagent)

Acrylonitrile was dissolved in dehydrated dimethylacetamide to be used, to give a 4.71-N acrylonitrile/dimethylacetamide solution. Separately, commercially available potassium t-butoxide and the dehydrated dimethylacetamide solution were used to prepare a 0.025-N solution.

### (Continuous polymerization)

First, the entire system in the apparatus was vacuum dried for carrying out a reaction in a high purity argon atmosphere. Then, each of the acrylonitrile/dimethylacetamide solution and the potassium t-butoxide solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, the maximum percentage of fluctuations in the flow rates was 0.3%. The temperatures of both of the raw material solutions were controlled to 30°C to 40°C, and the continuous reaction was allowed to proceed for 10 hours.

### (Additional operation)

The resulting polymerization solution was fed into the distillation vessel in the apparatus, and polymerization was terminated with aqueous hydrogen chloride. The dimethylacetamide solution was subjected to continuous distillation at reduced pressure for removal of excessive solvent and, as a result, the concentration of the polymerization solution became approximately 0.55 kg/L. Spray drying was performed to give 33.7 kg of polybutadiene rubber. The yield was 75%. The resulting polybutadiene rubber had a molecular weight (Mw) of 12,300 and a degree of distribution (Mw/Mn) of 1.21.

### [Synthesis Example 6]

### (Preparation of raw material reagent)

In order to reduce the moisture contents of hexane and tetrahydrofuran to be used, dehydration and purification were performed using CaH₂. A 3.12-N 1,3-butadiene/hexane solution was prepared under a low temperature and a dehydration state. Styrene and THF after subjected to dehydration and purification using sodium were used to prepare a 0.78-N solution. Separately, commercially available s-butyllithium and the purified THF solution were used to prepare a 0.025-N solution.

### (Continuous polymerization)

First, the entire system in the apparatus was vacuum dried for carrying out a reaction in a high purity argon atmosphere. Then, each of the 1,3-butadiene/hexane solution prepared above, the styrene/THF solution prepared above, and, as a polymerization initiator, the s-butyllithium solution prepared above was transferred into the pressure vessel, and three triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, the maximum percentage of fluctuations in the flow rates was 0.3%. The temperatures of both of the raw material solutions were controlled to 10°C to 20°C, and the continuous reaction was allowed to proceed for 10 hours.

### (Additional operation)

The resulting polymerization solution was fed into the distillation vessel in the apparatus, and polymerization was terminated with methanol. The THF/hexane solution was subjected to continuous distillation at normal pressure for removal of excessive solvent and, as a result, the concentration of the polymerization solution became approximately 0.55 kg/L. Spray drying was performed to give 33.8 kg of a styrene-butadiene random copolymer. The yield was 75%. The resulting styrene-butadiene random copolymer had a molecular weight (Mw) of 10,300 and a degree of distribution (Mw/Mn) of 1.05.

### [Comparative Synthesis Example 1]

### (Preparation of raw material reagent)

In order to reduce the moisture content in tetrahydrofuran (THF) to be used, dehydration and purification were performed using CaH₂. A styrene monomer was subjected to a dehydration reaction using sodium. Separately, commercially available s-butyllithium and the purified THF solution were used to prepare a 1.0-N solution.

### (Batch polymerization)

First, a 10-L reaction vessel having a volume equivalent to the volume required for the continuous reaction apparatus of the embodiments described above was vacuum dried for carrying out a reaction in a high purity argon atmosphere. Then, both of 50 ml of the s-butyllithium/THF solution and 5 L of the purified tetrahydrofuran prepared above were transferred into a reaction vessel. Cooling was performed to achieve an internal temperature of -70°C, and thereinto 500 g of the styrene monomer was poured over 3 hours. A reaction was allowed to proceed at the same temperature of -70°C for 5 hours, and then the reaction was terminated with 20 ml of methanol. Subsequently, warming was performed to achieve a reaction internal temperature of 25°C.

### (Additional operation)

The resulting polymerization solution was fed into the distillation vessel. The THF solution was subjected to distillation at normal pressure for removal of excessive solvent and, as a result, the concentration of the polymerization solution became approximately 0.65 kg/L. Spray drying was performed to give 0.47 kg of polystyrene. The yield was 94%. The resulting polystyrene had a molecular weight (Mw) of 10,800 and a degree of distribution (Mw/Mn) of 1.12.

### [Comparative Synthesis Example 2]

### (Preparation of raw material reagent)

In order to reduce the moisture content in tetrahydrofuran (THF) to be used, dehydration and purification were performed using CaH₂. A styrene monomer was subjected to a dehydration reaction using sodium. The resulting styrene monomer was diluted with the purified THF solution to give a 0.96-N solution. Separately, commercially available s-butyllithium and the purified THF solution were used to prepare a 0.01-N solution.

### (Continuous polymerization without accurate control of flow rate)

First, the entire system in the apparatus was vacuum dried for carrying out a reaction in a high purity argon atmosphere. Then, each of the styrene monomer/THF solution and the s-butyllithium solution prepared above was transferred into the pressure vessel, and pressure was applied from an argon cylinder to perform feeding into the static stirrer. At this time, the solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, however, the maximum percentage of fluctuations in the flow rates was 27%. The temperatures of both of the raw material solutions were controlled to -40°C to -30°C, and the continuous reaction was allowed to proceed for 10 hours.

### (Additional operation)

The resulting polymerization solution was fed into the distillation vessel in the apparatus, and polymerization was terminated with methanol. The THF solution was subjected to continuous distillation at normal pressure for removal of excessive solvent and, as a result, the concentration of the polymerization solution became approximately 0.65 kg/L. Spray drying was performed to give 17.1 kg of polystyrene. The yield was 95%. The resulting polystyrene had a molecular weight (Mw) of 11,100 and a degree of distribution (Mw/Mn) of 1.13.

### [Comparative Synthesis Example 3]

### (Preparation of raw material reagent)

In order to reduce the moisture content in tetrahydrofuran (THF) to be used, dehydration and purification were performed using CaH₂. Methyl methacrylate was subjected to dehydration and purification using sodium. Separately, commercially available triphenylmethylsodium and the purified THF solution were used to prepare a 1.0-N solution.

### (Batch polymerization)

First, a 10-L reaction vessel having a volume equivalent to the volume required for the continuous reaction apparatus of the embodiments described above was vacuum dried for carrying out a reaction in a high purity argon atmosphere. Then, both of 50 ml of the s-butyllithium/THF solution and 5 L of the purified tetrahydrofuran prepared above were transferred into a reaction vessel. Cooling was performed to achieve an internal temperature of -20°C, and thereinto 500 g of the methyl methacrylate monomer was poured over 3 hours. A reaction was allowed to proceed at the same temperature of -20°C for 5 hours, and then the reaction was terminated with 20 ml of methanol. Subsequently, warming was performed to achieve a reaction internal temperature of 25°C.

### (Additional operation)

The resulting polymerization solution was fed into the distillation vessel. The THF solution was subjected to distillation at normal pressure for removal of excessive solvent and, as a result, the concentration of the polymerization solution became approximately 0.65 kg/L. Spray drying was performed to give 0.45 kg of polymethyl methacrylate. The yield was 89%. The resulting polymethyl methacrylate had a molecular weight (Mw) of 12,000 and a degree of distribution (Mw/Mn) of 1.13.

### [Comparative Synthesis Example 4]

### (Preparation of raw material reagent)

In order to reduce the moisture content in tetrahydrofuran (THF) to be used, dehydration and purification were performed using CaH₂. Methyl methacrylate was subjected to a dehydration reaction using sodium. The resulting methyl methacrylate monomer was diluted with the purified THF solution to give a 1.0-N solution. Separately, commercially available triphenylmethylsodium and the purified THF solution were used to prepare a 0.01-N solution.

### (Continuous polymerization without accurate control of flow rate)

First, the entire system in the apparatus was vacuum dried for carrying out a reaction in a high purity argon atmosphere. Then, each of the methyl methacrylate monomer/THF solution and the triphenylmethylsodium solution prepared above was transferred into the pressure vessel, and pressure was applied from an argon cylinder to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby a continuous reaction was carried out. The temperatures of the raw materials were controlled with temperature sensors provided on the upstream side of the static stirrer and between static stirrers connected to each other. The flow speeds of both of the raw material solutions were controlled to 0.3 L/min. At this time, however, the maximum percentage of fluctuations in the flow rates was 33%. The temperatures of both of the raw material solutions were controlled to -10°C to -0°C, and the continuous reaction was allowed to proceed for 10 hours.

### (Additional operation)

The resulting polymerization solution was fed into the distillation vessel in the apparatus, and polymerization was terminated with methanol. The THF solution was subjected to continuous distillation at normal pressure for removal of excessive solvent and, as a result, the concentration of the polymerization solution became approximately 0.7 kg/L. Spray drying was performed to give 14.2 kg of polymethyl methacrylate. The yield was 79%. The resulting polymethyl methacrylate had a molecular weight (Mw) of 11,800 and a degree of distribution (Mw/Mn) of 1.12.

The results of comparison are illustrated in Table 1. Synthesis amount ratios in the following table refer to the amount of continuous synthesis/the amount of batch synthesis.

**[Table 1]**

| Example | Polymer | Polymerization mode | Yield | Synthesis amount ratio | Molecular weight set | Molecular weight | Degree of distribution |
|---|---|---|---|---|---|---|---|
| Synthesis Example 1 | Polystyrene | Continuous method (flow rate controlled) | 17.3 kg | 36.8 | 10,000 | 10,200 | 1.04 |
| Comparative Synthesis Example 1 | | Batch method | 0.47 kg | | | 10,800 | 1.12 |
| Comparative Synthesis Example 2 | | Continuous method (pressure feeding alone) | 17.1 kg | 36.4 | | 11,100 | 1.13 |
| Synthesis Example 3 | Polymethyl methacrylate | Continuous method (flow rate controlled) | 16.6 kg | 36.8 | | 10,100 | 1.04 |
| Comparative Synthesis Example 3 | | Batch method | 0.45 kg | | | 12,000 | 1.13 |
| Comparative Synthesis Example 4 | | Continuous method (pressure feeding alone) | 14.2 kg | 31.6 | | 11,800 | 1.12 |

As illustrated in Table 1, in the continuous living anionic polymerization reaction, by using flowmeters (mass flow meters) to measure the flow rates of one or more types of raw material monomer solutions and a polymerization initiator solution at the time of introduction, stably controlling the flow rates, and controlling the temperatures at the time of introduction and the temperature during polymerization, the continuous reaction apparatus according to the embodiments described above can mass-produce a polymer compound in an amount several dozens of times greater than when a conventional batch polymerization synthesis apparatus having a volume corresponding to the volume of the continuous reaction apparatus according to the embodiments described above is used for polymerization, and also have extremely great control of the molecular weight and the degree of distribution of the resulting polymer compound. Accordingly, the continuous reaction apparatus according to the embodiments described above can produce a polymer in a considerable amount despite the small size of the apparatus. Thus, the continuous reaction apparatus according to the embodiments described above can have dramatically improved mass-production efficiency and can have dramatically improved control of the resulting polymer. In addition, because size reduction of the apparatus and rapid and efficient production are now possible, the cost of required capital investment in plant and equipment can be dramatically decreased.

Next, Synthesis Example 7 to Synthesis Example 17 and Comparative Synthesis Example 5 to Comparative Synthesis Example 9 are provided to describe examples of block copolymer synthesis. Although these synthesis examples and comparative synthesis examples are provided to specifically describe the present invention, the scope of the present invention is not limited to the following examples of synthesis.

### [Synthesis Example 7]

### (Preparation of raw material reagent)

In order to reduce the moisture content in benzene to be used, dehydration and purification were performed using CaH₂. A styrene monomer and a t-butoxystyrene monomer were subjected to a dehydration reaction using triphenylmethyllithium. The resulting styrene monomer and the resulting t-butoxystyrene monomer were diluted with the purified benzene solution to give 0.74-N solutions. Separately, commercially available s-butyllithium and the purified benzene solution were used to prepare a 0.01-N solution.

### (Continuous diblock copolymerization)

First, the entire system in the apparatus was vacuum dried for carrying out reactions in a high purity argon atmosphere. Then, each of the styrene monomer/benzene solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The t-butoxystyrene/benzene solution was also fed and introduced into the latter half of a series of connected static stirrers using another triple plunger pump, whereby additional block polymerization was carried out. The temperatures of the raw materials were controlled with temperature sensors provided on the upstream side of the static stirrers and between the static stirrers connected to each other. The flow speeds of both of the raw material solutions and the initiator solution were controlled to 0.2 L/min. At this time, the maximum percentage of fluctuations in the flow rates of the raw material monomers was 0.4%. The temperatures of all of the raw material solutions were controlled to -20°C to -10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 22.1 kg of a styrene-t-butoxystyrene copolymer of the following formula. The yield was 93%. The resulting styrene-t-butoxystyrene copolymer had a molecular weight (Mw) of 20,100 and a degree of distribution (Mw/Mn) of 1.05.

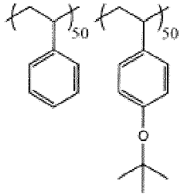

### [Synthesis Example 8]

### (Preparation of raw material reagent)

In order to reduce the moisture content in benzene to be used, dehydration and purification were performed using CaH₂. A styrene monomer was subjected to a dehydration reaction using triphenylmethyllithium. The resulting styrene monomer was diluted with the purified benzene solution to give a 1.16-N solution. Separately, a 1.16-N isoprene/toluene solution was prepared and, in addition, commercially available s-butyllithium and the purified benzene solution were used to prepare a 0.01-N solution.

### (Continuous diblock copolymerization)

First, the entire system in the apparatus was vacuum dried for carrying out reactions in a high purity argon atmosphere. Then, each of the styrene monomer/benzene solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The isoprene/benzene solution was also fed and introduced into the latter half of a series of connected static stirrers using another triple plunger pump, whereby additional block polymerization was carried out. The temperatures of the raw materials were controlled with temperature sensors provided on the upstream side of the static stirrers and between the static stirrers connected to each other. The flow speeds of both of the raw material solutions were controlled to 0.2 L/min. At this time, the maximum percentage of fluctuations in the flow rates of the raw material monomers was 0.2%. The temperatures of the raw materials were controlled to -20°C to -10°C in the styrene reaction step and to 50°C to 60°C in the isoprene reaction step. The continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 10.9 kg of a styrene-isoprene copolymer of the following formula. The yield was 91%. The resulting styrene-isoprene copolymer had a molecular weight (Mw) of 20,100 and a degree of distribution (Mw/Mn) of 1.04.

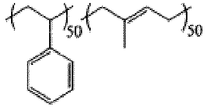

### [Synthesis Example 9]

### (Preparation of raw material reagent)

In order to reduce the moisture content in benzene to be used, dehydration and purification were performed using CaH₂. A styrene monomer and 2-vinylpyridine were independently subjected to a dehydration reaction using triphenylmethyllithium. The resulting styrene monomer and the resulting 2-vinylpyridine monomer were diluted with the purified benzene solution to give 0.956-N solutions. Separately, commercially available s-butyllithium and the purified benzene solution were used to prepare a 0.01-N solution.

### (Continuous diblock copolymerization)

First, the entire system in the apparatus was vacuum dried for carrying out reactions in a high purity argon atmosphere. Then, each of the styrene monomer/benzene solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The 2-vinylpyridine/benzene solution was also fed and introduced into the latter half of a series of connected static stirrers using another triple plunger pump, whereby additional block polymerization was carried out. The temperatures of the raw materials were controlled with temperature sensors provided on the upstream side of the static stirrers and between the static stirrers connected to each other. The flow speeds of both of the raw material solutions were controlled to 0.3 L/min. At this time, the maximum percentage of fluctuations in the flow rates of the raw material monomers was 0.4%. The temperatures of all of the raw material solutions were controlled to -40°C to - 30°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 17.3 kg of a styrene-2-vinylpyridine copolymer of the following formula. The yield was 96%. The resulting styrene-2-vinylpyridine copolymer had a molecular weight (Mw) of 19,900 and a degree of distribution (Mw/Mn) of 1.03.

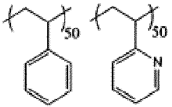

### [Synthesis Example 10]

### (Preparation of raw material reagent)

In order to reduce the moisture content in tetrahydrofuran (THF) to be used, dehydration and purification were performed using CaH₂. A styrene monomer and methyl methacrylate were independently subjected to a dehydration reaction using triphenylmethyllithium. The resulting styrene monomer and the resulting methyl methacrylate monomer were diluted with the purified THF solution to give 0.98-N solutions. Separately, commercially available s-butyllithium and the purified THF solution were used to prepare a 0.01-N solution.

### (Continuous diblock copolymerization)

First, the entire system in the apparatus was vacuum dried for carrying out reactions in a high purity argon atmosphere. Then, each of the styrene monomer/THF solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The methyl methacrylate/THF solution was also fed and introduced into the latter half of a series of connected static stirrers using another triple plunger pump, whereby additional block polymerization was carried out. The temperatures of the raw materials were controlled with temperature sensors provided on the upstream side of the static stirrers and between the static stirrers connected to each other. The flow speeds of both of the raw material solutions were controlled to 0.3 L/min. At this time, the maximum percentage of fluctuations in the flow rates of the raw material monomers was 0.2%. The temperatures of all of the raw material solutions were controlled to -20°C to - 10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 15.8 kg of a styrene-methyl methacrylate ester copolymer of the following formula. The yield was 88%. The resulting styrene-methyl methacrylate ester copolymer had a molecular weight (Mw) of 20,700 and a degree of distribution (Mw/Mn) of 1.05.

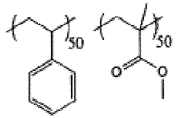

### [Synthesis Example 11]

### (Preparation of raw material reagent)

In order to reduce the moisture content in tetrahydrofuran (THF) to be used, dehydration and purification were performed using CaH₂. A styrene monomer and acrylonitrile were independently subjected to a dehydration reaction using triphenylmethyllithium. The resulting styrene monomer and the resulting acrylonitrile monomer were diluted with the purified THF solution to give 1.27-N solutions. Separately, commercially available s-butyllithium and the purified THF solution were used to prepare a 0.01-N solution.

### (Continuous diblock copolymerization)

First, the entire system in the apparatus was vacuum dried for carrying out reactions in a high purity argon atmosphere. Then, each of the styrene monomer/THF solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The acrylonitrile/THF solution was also fed and introduced into the latter half of a series of connected static stirrers using another triple plunger pump, whereby additional block polymerization was carried out. The temperatures of the raw materials were controlled with temperature sensors provided on the upstream side of the static stirrers and between the static stirrers connected to each other. The flow speeds of both of the raw material solutions were controlled to 0.3 L/min. At this time, the maximum percentage of fluctuations in the flow rates of the raw material monomers was 0.4%. The temperatures of all of the raw material solutions were controlled to -20°C to - 10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 12.6 kg of a styrene-acrylonitrile copolymer of the following formula. The yield was 90%. The resulting styrene-acrylonitrile copolymer had a molecular weight (Mw) of 20,400 and a degree of distribution (Mw/Mn) of 1.03.

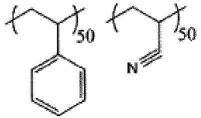

### [Synthesis Example 12]

### (Preparation of raw material reagent)

In order to reduce the moisture content in tetrahydrofuran (THF) to be used, dehydration and purification were performed using CaH₂. A 4-t-butoxystyrene monomer and methacrylic acid t-butyl ester were independently subjected to a dehydration reaction using triphenylmethyllithium. The resulting 4-t-butoxystyrene monomer and the resulting methacrylic acid t-butyl ester monomer were diluted with the purified THF solution to give 0.628-N solutions. Separately, commercially available s-butyllithium and the purified THF solution were used to prepare a 0.01-N solution.

### (Continuous diblock copolymerization)

First, the entire system in the apparatus was vacuum dried for carrying out reactions in a high purity argon atmosphere. Then, each of the 4-t-butoxystyrene monomer/THF solution and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The methacrylic acid t-butyl ester/THF solution was also fed and introduced into the latter half of a series of connected static stirrers using another triple plunger pump, whereby additional block polymerization was carried out. The temperatures of the raw materials were controlled with temperature sensors provided on the upstream side of the static stirrers and between the static stirrers connected to each other. The flow speeds of both of the raw material solutions were controlled to 0.2 L/min. At this time, the maximum percentage of fluctuations in the flow rates of the raw material monomers was 0.5%. The temperatures of all of the raw material solutions were controlled to -30°C to -20°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 10.2 kg of a 4-t-butoxystyrene-methacrylic acid t-butyl ester copolymer of the following formula. The yield was 85%. The resulting 4-t-butoxystyrene-methacrylic acid t-butyl ester copolymer had a molecular weight (Mw) of 20,700 and a degree of distribution (Mw/Mn) of 1.07.

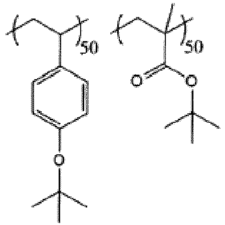

### [Synthesis Example 13]

### (Preparation of raw material reagent)

In order to reduce the moisture content in benzene to be used, dehydration and purification were performed using CaH₂. A styrene monomer and a t-butoxystyrene monomer were subjected to a dehydration reaction using triphenylmethyllithium. The resulting styrene monomer and the resulting t-butoxystyrene monomer were diluted with the purified benzene solution to give a 0.43-N solution and a 0.58-N solution, respectively. Separately, a 0.95-N cooled and liquefied butadiene/benzene solution was prepared and, in addition, commercially available s-butyllithium and the purified benzene solution were used to prepare a 0.01-N solution.

### (Continuous triblock copolymerization)

First, the entire system in the apparatus was vacuum dried for carrying out reactions in a high purity argon atmosphere. Then, each of the styrene monomer/benzene solution (first step) and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The t-butoxystyrene/benzene solution was also fed and introduced into the latter half of a series of connected static stirrers using another triple plunger pump, and lastly the styrene monomer/benzene solution (second step) was fed into the static stirrer, whereby triblock polymerization was carried out. The temperatures of the raw materials were controlled with temperature sensors provided on the upstream of the static stirrers and between the static stirrers connected to each other. The flow speeds of both of the raw material solutions and the initiator solution were controlled to 0.2 L/min. At this time, the maximum percentage of fluctuations in the flow rates of the raw material monomers was 0.3%. The temperatures of all of the raw material solutions were controlled to -20°C to -10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 22.6 kg of a styrene-t-butoxystyrene-styrene copolymer of the following formula. The yield was 94%. The resulting styrene-t-butoxystyrene-styrene copolymer had a molecular weight (Mw) of 20,400 and a degree of distribution (Mw/Mn) of 1.08.

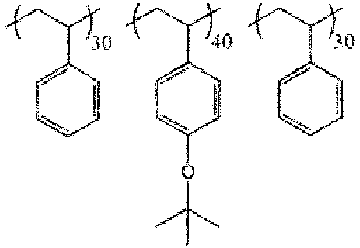

### [Synthesis Example 14]

### (Preparation of raw material reagent)

In order to reduce the moisture content in benzene to be used, dehydration and purification were performed using CaH₂. A styrene monomer and 4-chlorostyrene were subjected to a dehydration reaction using triphenylmethyllithium. The resulting styrene monomer and the resulting 4-chlorostyrene monomer were diluted with the purified benzene solution to give a 0.51-N solution and a 0.68-N solution, respectively. Separately, a 0.67-N isoprene/benzene solution purified in the same manner was prepared and, in addition, commercially available s-butyllithium and the purified benzene solution were used to prepare a 0.01-N solution.

### (Continuous triblock copolymerization)

First, the entire system in the apparatus was vacuum dried for carrying out reactions in a high purity argon atmosphere. Then, each of the styrene monomer/benzene solution (first step) and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The 4-chlorostyrene/benzene solution was also fed and introduced into the latter half of a series of connected static stirrers using another triple plunger pump, and lastly the styrene monomer/benzene solution (second step) was fed into the static stirrer, whereby triblock polymerization was carried out. The temperatures of the raw materials were controlled with temperature sensors provided on the upstream side of the static stirrers and between the static stirrers connected to each other. The flow speeds of both of the raw material solutions and the initiator solution were controlled to 0.2 L/min. At this time, the maximum percentage of fluctuations in the flow rates of the raw material monomers was 0.5%. The temperatures of all of the raw material solutions were controlled to -20°C to -10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 22.8 kg of a styrene-4-chlorostyrene-styrene copolymer of the following formula. The yield was 95%. The resulting styrene-4-chlorostyrene-styrene copolymer had a molecular weight (Mw) of 20,100 and a degree of distribution (Mw/Mn) of 1.04.

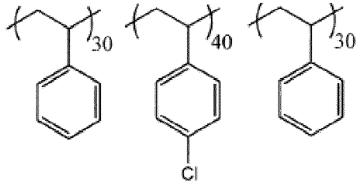

### [Synthesis Example 15]

### (Preparation of raw material reagent)

In order to reduce the moisture content in benzene to be used, dehydration and purification were performed using CaH₂. A styrene monomer and a t-butoxystyrene monomer were subjected to a dehydration reaction using triphenylmethyllithium. The resulting styrene monomer and the resulting t-butoxystyrene monomer were diluted with the purified benzene solution to give a 0.725-N solution and a 0.544-N solution, respectively. Separately, a 0.544-N acrylonitrile/benzene solution was prepared and, in addition, commercially available s-butyllithium and the purified benzene solution were used to prepare a 0.01-N solution.

### (Continuous triblock copolymerization)

First, the entire system in the apparatus was vacuum dried for carrying out reactions in a high purity argon atmosphere. Then, each of the styrene monomer/benzene solution (first step) and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The t-butoxystyrene monomer/benzene solution (second step) was also fed and introduced into the latter half of a series of connected static stirrers using another triple plunger pump, and lastly the acrylonitrile monomer/benzene solution (third step) was fed into the static stirrer, whereby triblock polymerization was carried out. The temperatures of the raw materials were controlled with temperature sensors provided on the upstream side of the static stirrers and between the static stirrers connected to each other. The flow speeds of both of the raw material solutions and the initiator solution were controlled to 0.2 L/min. At this time, the maximum percentage of fluctuations in the flow rates of the raw material monomers was 0.4%. The temperatures of all of the raw material solutions were controlled to -20°C to -10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 23.0 kg of a styrene-t-butoxystyrene-acrylonitrile copolymer (ABS resin) of the following formula. The yield was 96%. The resulting styrene-t-butoxystyrene-acrylonitrile copolymer (ABS resin) had a molecular weight (Mw) of 20,500 and a degree of distribution (Mw/Mn) of 1.07.

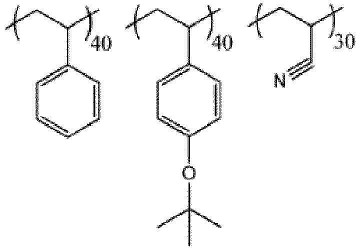

### [Synthesis Example 16]

### (Preparation of raw material reagent)

In order to reduce the moisture content in benzene to be used, dehydration and purification were performed using CaH₂. A styrene monomer and a t-butoxystyrene monomer were subjected to a dehydration reaction using triphenylmethyllithium. The resulting styrene monomer and the resulting t-butoxystyrene monomer were diluted with the purified benzene solution to give a 0.643-N solution and a 0.482-N solution, respectively. Separately, a 0.683-N methyl methacrylate ester/benzene solution was prepared and, in addition, commercially available s-butyllithium and the purified benzene solution were used to prepare a 0.01-N solution.

### (Continuous triblock copolymerization)

First, the entire system in the apparatus was vacuum dried for carrying out reactions in a high purity argon atmosphere. Then, each of the styrene monomer/benzene solution (first step) and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The t-butoxystyrene monomer/benzene solution (second step) was also fed and introduced into the latter half of a series of connected static stirrers using another triple plunger pump, and lastly the methyl methacrylate ester monomer/benzene solution (third step) was fed into the static stirrer, whereby triblock polymerization was carried out. The temperatures of the raw materials were controlled with temperature sensors provided on the upstream side of the static stirrers and between the static stirrers connected to each other. The flow speeds of both of the raw material solutions and the initiator solution were controlled to 0.2 L/min. At this time, the maximum percentage of fluctuations in the flow rates of the raw material monomers was 0.5%. The temperatures of all of the raw material solutions were controlled to -20°C to -10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 21.4 kg of a styrene-t-butoxystyrene-methyl methacrylate ester copolymer of the following formula. The yield was 89%. The resulting styrene-t-butoxystyrene-methyl methacrylate ester copolymer had a molecular weight (Mw) of 20,900 and a degree of distribution (Mw/Mn) of 1.06.

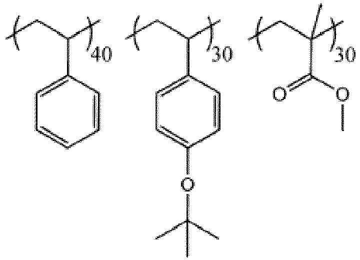

### [Synthesis Example 17]

### (Preparation of raw material reagent)

In order to reduce the moisture content in benzene to be used, dehydration and purification were performed using CaH₂. A styrene monomer was subjected to a dehydration reaction using triphenylmethyllithium. The resulting styrene monomer was diluted with the purified benzene solution to give a 0.914-N solution. Separately, a 0.685-N acrylonitrile/benzene solution and a 0.685-N methyl methacrylate ester/benzene solution purified in the same manner were prepared and, in addition, commercially available s-butyllithium and the purified benzene solution were used to prepare a 0.01-N solution.

### (Continuous triblock copolymerization)

First, the entire system in the apparatus was vacuum dried for carrying out reactions in a high purity argon atmosphere. Then, each of the styrene monomer/benzene solution (first step) and the s-butyllithium solution prepared above was transferred into the pressure vessel, and two triple plunger pumps were used to perform feeding into the static stirrer. The flow speeds of the raw material solutions were measured with Coriolis flowmeters. The solutions were cooled through spiral cooling tubes before subjected to a reaction, and were then fed into the static stirrer and mixed, whereby continuous polymerization was carried out. The acrylonitrile monomer/benzene solution (second step) was also fed and introduced into the latter half of a series of connected static stirrers using another triple plunger pump, and lastly the methyl methacrylate ester monomer/benzene solution (third step) was fed into the static stirrer, whereby triblock polymerization was carried out. The temperatures of the raw materials were controlled with temperature sensors provided on the upstream side of the static stirrers and between the static stirrers connected to each other. The flow speeds of both of the raw material solutions and the initiator solution were controlled to 0.2 L/min. At this time, the maximum percentage of fluctuations in the flow rates of the raw material monomers was 0.2%. The temperatures of all of the raw material solutions were controlled to -20°C to -10°C, and the continuous reaction was allowed to proceed for 10 hours.

### (Additional operation)

The resulting polymerization solution was fed into the distillation vessel in the apparatus, and polymerization was terminated with methanol. The benzene solution was subjected to continuous distillation at normal pressure for removal of excessive solvent and, as a result, the concentration of the polymerization solution became approximately 0.60 kg/L. Spray drying was performed to give 20.4 kg of styrene-acrylonitrile-methyl methacrylate (ester copolymer) of the following formula. The yield was 85%. The resulting styrene-acrylonitrile-methyl methacrylate (ester copolymer) had a molecular weight (Mw) of 19,700 and a degree of distribution (Mw/Mn) of 1.04.

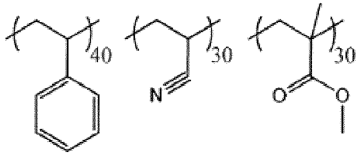

### [Comparative Synthesis Example 5]

### (Preparation of raw material reagent)

In order to reduce the moisture content in benzene to be used, dehydration and purification were performed using CaH₂. A styrene monomer and a t-butoxystyrene monomer were subjected to a dehydration reaction using triphenylmethyllithium. Separately, commercially available s-butyllithium and the purified benzene solution were used to prepare a 1.0-N solution.

### (Batch polymerization)

First, a 10-L reaction vessel having a volume equivalent to the volume required for the continuous reaction apparatus of the embodiments described above was vacuum dried for carrying out a reaction in a high purity argon atmosphere. Then, both of 25 ml of the s-butyllithium/benzene solution and 5 L of the purified benzene prepared above were transferred into a reaction vessel. Cooling was performed to achieve an internal temperature of -70°C, and thereinto 185.5 g of the styrene monomer was poured over 3 hours. The temperature was raised to reach -20°C, and 314.5 g of the t-butoxystyrene monomer was introduced thereto over 3 hours. A reaction was allowed to proceed for another 2 hours, and was then terminated with 20 ml of methanol. Subsequently, warming was performed to achieve a reaction internal temperature of 25°C.

### (Additional operation)

The resulting polymerization solution was fed into the distillation vessel. The benzene solution was subjected to distillation at normal pressure for removal of excessive solvent and, as a result, the concentration of the polymerization solution became approximately 0.65 kg/L. Spray drying was performed to give 0.485 kg of a styrene-t-butoxystyrene copolymer. The yield was 97%. The resulting styrene-t-butoxystyrene copolymer had a molecular weight (Mw) of 21,200 and a degree of distribution (Mw/Mn) of 1.07.

### [Comparative Synthesis Example 6]

### (Preparation of raw material reagent)

In order to reduce the moisture content in benzene to be used, dehydration and purification were performed using CaH₂. A styrene monomer and a methyl methacrylate ester monomer were subjected to a dehydration reaction using triphenylmethyllithium. Separately, commercially available s-butyllithium and the purified benzene solution were used to prepare a 1.0-N solution.

### (Batch polymerization)

First, a 10-L reaction vessel having a volume equivalent to the volume required for the continuous reaction apparatus of the embodiments described above was vacuum dried for carrying out a reaction in a high purity argon atmosphere. Then, both of 25 ml of the s-butyllithium/benzene solution and 5 L of the purified benzene prepared above were transferred into a reaction vessel. Cooling was performed to achieve an internal temperature of -70°C, and thereinto 255 g of the styrene monomer was poured over 3 hours. The temperature was raised to reach -20°C, and 245 g of the methyl methacrylate ester monomer was introduced thereto over 3 hours. A reaction was allowed to proceed for another 2 hours, and was then terminated with 20 ml of methanol. Subsequently, warming was performed to achieve a reaction internal temperature of 25°C.

### (Additional operation)

The resulting polymerization solution was fed into the distillation vessel. The benzene solution was subjected to distillation at normal pressure for removal of excessive solvent and, as a result, the concentration of the polymerization solution became approximately 0.65 kg/L. Spray drying was performed to give 0.45 kg of a styrene-methyl methacrylate ester copolymer. The yield was 90%. The resulting styrene-methyl methacrylate ester copolymer had a molecular weight (Mw) of 21,500 and a degree of distribution (Mw/Mn) of 1.12.

### [Comparative Synthesis Example 7]

### (Preparation of raw material reagent)

In order to reduce the moisture content in benzene to be used, dehydration and purification were performed using CaH₂. A styrene monomer and a t-butoxystyrene monomer were subjected to a dehydration reaction using triphenylmethyllithium. Separately, commercially available s-butyllithium and the purified benzene solution were used to prepare a 1.0-N solution.

### (Batch polymerization)

First, a 10-L reaction vessel having a volume equivalent to the volume required for the continuous reaction apparatus of the embodiments described above was vacuum dried for carrying out a reaction in a high purity argon atmosphere. Then, both of 25 ml of the s-butyllithium/benzene solution and 5 L of the purified benzene prepared above were transferred into a reaction vessel. Cooling was performed to achieve an internal temperature of -70°C, and thereinto 117 g of the styrene monomer was poured over 2 hours. The temperature was raised to reach -20°C, and 265 g of the t-butoxystyrene monomer was introduced thereto over 3 hours. A reaction was allowed to proceed for another 2 hours, and then another cooling was performed to achieve -70°C, at which 174 g of the styrene monomer was poured thereinto over 2 hours. Polymerization was allowed to proceed for another 1 hour, and the reaction was terminated with 20 ml of methanol. Subsequently, warming was performed to achieve a reaction internal temperature of 25°C.

### (Additional operation)

The resulting polymerization solution was fed into the distillation vessel. The benzene solution was subjected to distillation at normal pressure for removal of excessive solvent and, as a result, the concentration of the polymerization solution became approximately 0.65 kg/L. Spray drying was performed to give 0.43 kg of a styrene-t-butoxystyrene-styrene copolymer. The yield was 85%. The resulting styrene-t-butoxystyrene-styrene copolymer had a molecular weight (Mw) of 21,700 and a degree of distribution (Mw/Mn) of 1.14.

### [Comparative Synthesis Example 8]

### (Preparation of raw material reagent)

In order to reduce the moisture content in benzene to be used, dehydration and purification were performed using CaH₂. A styrene monomer, a t-butoxystyrene monomer, and a methyl methacrylate ester monomer were subjected to a dehydration reaction using triphenylmethyllithium. Separately, commercially available s-butyllithium and the purified benzene solution were used to prepare a 1.0-N solution.

### (Batch polymerization)

First, a 10-L reaction vessel having a volume equivalent to the volume required for the continuous reaction apparatus of the embodiments described above was vacuum dried for carrying out a reaction in a high purity argon atmosphere. Then, both of 25 ml of the s-butyllithium/benzene solution and 5 L of the purified benzene prepared above were transferred into a reaction vessel. Cooling was performed to achieve an internal temperature of -70°C, and thereinto 167 g of the styrene monomer was poured over 2 hours. The temperature was raised to reach -60°C, and 212 g of the t-butoxystyrene monomer was introduced thereto over 3 hours. A reaction was allowed to proceed for another 2 hours, and then the temperature was raised to reach -10, at which 121 g of the methyl methacrylate ester monomer was poured thereinto over 2 hours. Polymerization was allowed to proceed for another 1 hour, and the reaction was terminated with 20 ml of methanol. Subsequently, warming was performed to achieve a reaction internal temperature of 25°C.

### (Additional operation)

The resulting polymerization solution was fed into the distillation vessel. The benzene solution was subjected to distillation at normal pressure for removal of excessive solvent and, as a result, the concentration of the polymerization solution became approximately 0.65 kg/L. Spray drying was performed to give 0.41 kg of a styrene-t-butoxystyrene-methyl methacrylate ester copolymer. The yield was 82%. The resulting styrene-t-butoxystyrene-methyl methacrylate ester copolymer resin had a molecular weight (Mw) of 20,900 and a degree of distribution (Mw/Mn) of 1.08.

The results of comparison are illustrated in Table 2. Synthesis amount ratios in the following table refer to the amount of continuous synthesis/the amount of batch synthesis.

**[Table 2]**

| | Continuous method | | | Batch method | |
|---|---|---|---|---|---|
| Block copolymer name | Example | Amount synthesized | Synthesis amount ratio | Example | Amount synthesized |
| Styrene-t-butoxystyrene copolymer | Synthesis Example 7 | 22.1 kg | 45.1 times | Comparative Synthesis Example 5 | 0.49 kg |
| Styrene-methyl methacrylate ester copolymer | Synthesis Example 10 | 15.8 kg | 35.1 times | Comparative Synthesis Example 6 | 0.45 kg |
| Styrene-t-butoxystyrene-styrene copolymer | Synthesis Example 13 | 22.6 kg | 53.0 times | Comparative Synthesis Example 7 | 0.43 kg |
| Styrene-t-butoxystyrene-methyl methacrylate ester copolymer | Synthesis Example 17 | 20.4 kg | 49.8 times | Comparative Synthesis Example 8 | 0.41 kg |

As illustrated in Table 2, by using flowmeters to measure the flow rates of two or more raw material monomer solutions and a polymerization initiator solution at the time of introduction, stably controlling the flow rates, and controlling the temperatures at the time of introduction and the temperature during polymerization, the continuous reaction apparatus according to the embodiments described above can mass-produce a block copolymer in an amount equivalent to several dozens of times greater than when a conventional batch polymerization synthesis apparatus having a volume corresponding to the volume of the continuous reaction apparatus according to the embodiments described above is used for polymerization. Accordingly, the continuous reaction apparatus according to the embodiments described above can produce a block copolymer in a considerable amount despite the small size of the apparatus. Thus, the continuous reaction apparatus according to the embodiments described above can have dramatically improved mass-production efficiency and can have dramatically improved control over block polymerization. In addition, because size reduction of the apparatus and rapid and efficient production are now possible, the cost of required capital investment in plant and equipment can be dramatically decreased.

### Reference Signs List

10, 10a, 10b, 110, 110a CONTINUOUS REACTION APPARATUS
12, 112, 112a FIRST RAW MATERIAL FEEDING UNIT
14, 113, 113a SECOND RAW MATERIAL FEEDING UNIT
114, 114a THIRD RAW MATERIAL FEEDING UNIT
115, 115a FOURTH RAW MATERIAL FEEDING UNIT
16, 116 PRESSURE REGULATOR UNIT
18, 118 REACTOR UNIT
20, 120 RECOVERY UNIT
22 CONTROLLER
30a FIRST RAW MATERIAL VESSEL
30b SECOND RAW MATERIAL VESSEL
30c THIRD RAW MATERIAL VESSEL
30d FOURTH RAW MATERIAL VESSEL
31a, 31b, 31c, 31d CONTROL VALVE
32a, 32b, 32c, 32d METERING PUMP
34a, 34b, 34c, 34d HEAT EXCHANGER
35a, 35b, 35c, 35d MASS METER
36a, 36b, 36c, 36d UPSTREAM PRESSURE SENSOR
38a, 38b, 38c, 38d FLOWMETER
40a, 40b, 40c, 40d DOWNSTREAM PRESSURE SENSOR
42a, 42b UPSTREAM TEMPERATURE SENSOR
44a, 44b DOWNSTREAM TEMPERATURE SENSOR
46a, 46b, 46c, 46d DIP TUBE
50 PRESSURIZED CYLINDER
51 GAS SUPPLY TUBE
52 REDUCING VALVE
54 PRESSURE REGULATOR DEVICE
55a, 55b, 55c, 55d BRANCH TUBE
56a, 56b, 56c, 56d GAS CONTROL VALVE
60, 60a, 60b, 60c STATIC STIRRER
62, 62a, 62b, 62c TEMPERATURE CONTROL MECHANISM
64 UPSTREAM TEMPERATURE SENSOR
66 DOWNSTREAM TEMPERATURE SENSOR
70 RECOVERY VESSEL
80a, 80b, 80c, 80d FLOW CONTROLLER (MASS FLOW CONTROLLER)
La FIRST FEED LINE
Lb SECOND FEED LINE
Lc THIRD FEED LINE
Ld FOURTH FEED LINE
L1 REACTOR LINE

## Claims

1. A continuous reaction apparatus comprising:
a first raw material feeding unit that comprises a first raw material vessel configured to store therein a first raw material, a first feed line configured to distribute the first raw material stored in the first raw material vessel, and a first heat exchanger configured to exchange heat with the first raw material flowing through the first feed line, the first raw material feeding unit being operable to perform feeding of the first raw material that has undergone heat exchange by the heat exchanger;
a second raw material feeding unit that comprises a second raw material vessel configured to store therein a second raw material, a second feed line configured to distribute the second raw material stored in the second raw material vessel, and a second heat exchanger configured to exchange heat with the second raw material flowing through the second feed line, the second raw material feeding unit being operable to perform feeding of the second raw material that has undergone heat exchange by the heat exchanger;
a reactor unit that comprises a reactor line into which the first raw material is continuously fed from the first raw material feeding unit and the second raw material is continuously fed from the second raw material feeding unit and a static stirrer disposed on the reactor line and being operable to statically stir the first raw material and the second raw material fed into the reactor line, the reactor unit being operable to stir the first raw material and the second raw material with the static stirrer to continuously produce a reaction product of the first raw material and the second raw material; and
a controller configured to control an amount and a temperature of the first raw material that is being fed from the first raw material feeding unit into the reactor unit and an amount and a temperature of the second raw material that is being fed from the second raw material feeding unit into the reactor unit,
the first raw material being a raw material monomer solution containing a raw material monomer,
the second raw material being a polymerization initiator solution containing a polymerization initiator, and
the reaction product being a polymer compound resulting from a living anionic polymerization reaction of the raw material monomer.

2. The continuous reaction apparatus according to claim 1, wherein ranges of fluctuations in flow rates of the raw material monomer solution and the polymerization initiator solution that are being fed into the reactor unit are not greater than 1%.

3. The continuous reaction apparatus according to claim 1, wherein ranges of fluctuations in flow rates of the raw material monomer solution and the polymerization initiator solution that are being fed into the reactor unit are not greater than 0.5%.

4. The continuous reaction apparatus according to any one of claims 1 to 3, wherein the raw material monomer is an optionally substituted styrene monomer.

5. The continuous reaction apparatus according to any one of claims 1 to 4, wherein the raw material monomer includes a compound of Formula (1): 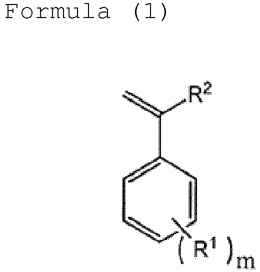 (in Formula (1), R¹ is a C₁₋₁₀ alkyl group, a C₁₋₁₀ alkoxy group, a trialkylsilyloxy group, an alkoxyalkyl group, a C₁₋₁₀ alkoxycarbonyl group, a C₁₋₁₀ alkoxy carbonyloxy group, or a halogen atom, R² is a hydrogen atom or a methyl group, and m is an integer of 0 to 5).

6. The continuous reaction apparatus according to any one of claims 1 to 5, wherein the raw material monomer includes a compound of Formula (2): 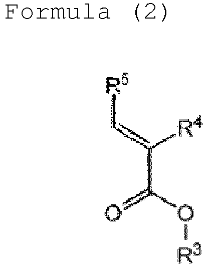 (in Formula (2), R³ is a hydrogen atom, a C₁₋₃₀ alkyl group, a trialkylsilyl group, or an alkoxyalkyl group, and R⁴ and R⁵ are independently a hydrogen atom, a methyl group, a cyano group, an alkoxycarbonyl group, or a trialkylsilyl group).

7. The continuous reaction apparatus according to any one of claims 1 to 6, wherein the raw material monomer includes a compound of Formula (3): 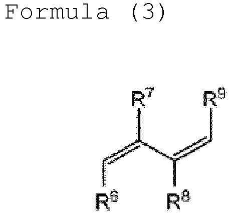 (in Formula (3), R⁶, R⁷, R⁸, and R⁹ are independently a hydrogen atom or a C₁₋₁₀ alkyl group).

8. The continuous reaction apparatus according to any one of claims 1 to 7, wherein the raw material monomer includes a compound of Formula (4): 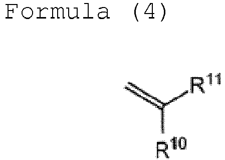 (in Formula (4), R¹⁰ and R¹¹ are independently a hydrogen atom, a C₁₋₁₀ alkyl group, a cyano group, or an alkoxycarbonyl group).

9. The continuous reaction apparatus according to any one of claims 1 to 4, wherein the raw material monomer includes two or more kinds selected from the group consisting of compounds of Formulae (1) to (4): 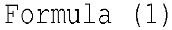 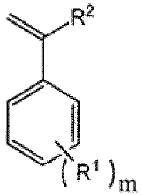 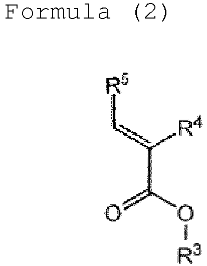 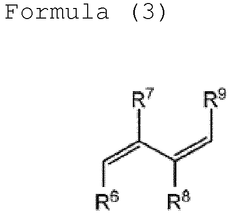 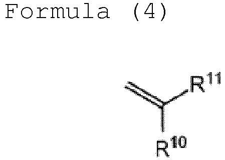 (in Formulae (1) to (4), R¹ is a C₁₋₁₀ alkyl group, a C₁₋₁₀ alkoxy group, a trialkylsilyloxy group, an alkoxyalkyl group, a C₁₋₁₀ alkoxycarbonyl group, a C₁₋₁₀ alkoxy carbonyloxy group, or a halogen atom, R² is a hydrogen atom or a methyl group, m is an integer of 0 to 5, R³ is a hydrogen atom, a C₁₋₃₀ alkyl group, a trialkylsilyl group, or an alkoxyalkyl group, R⁴ and R⁵ are independently a hydrogen atom, a methyl group, a cyano group, an alkoxycarbonyl group, or a trialkylsilyl group, R⁶, R⁷, R⁸, and R⁹ are independently a hydrogen atom or a C₁₋₁₀ alkyl group, and R¹⁰ and R¹¹ are independently a hydrogen atom, a C₁₋₁₀ alkyl group, a cyano group, or an alkoxycarbonyl group).

10. The continuous reaction apparatus according to any one of claims 1 to 9, wherein
the first heat exchanger cools the first raw material, and
the second heat exchanger cools the first raw material.

11. The continuous reaction apparatus according to any one of claims 1 to 10, further comprising a recovery unit configured to recover the reaction product continuously produced in the reactor unit.

12. The continuous reaction apparatus according to any one of claims 1 to 11, wherein
the reactor unit further comprises a temperature control mechanism configured to control a temperature in the static stirrer, and
the controller controls the temperature in the static stirrer.

13. The continuous reaction apparatus according to any one of claims 1 to 12, wherein
the first raw material feeding unit comprises a metering pump, the metering pump being disposed on the first feed line and being operable to transfer the first raw material toward the reactor unit, and
the second raw material feeding unit comprises a metering pump, the metering pump being disposed on the second feed line and being operable to transfer the second raw material toward the reactor unit.

14. The continuous reaction apparatus according to any one of claims 1 to 12, wherein
the first raw material feeding unit comprises a flow controller, the flow controller being disposed on the first feed line and being operable to control the flow rate of the first raw material being transferred toward the reactor unit, and
the second raw material feeding unit comprises a flow controller, the flow controller being disposed on the second feed line and being operable to control the flow rate of the second raw material being transferred toward the reactor unit.

15. The continuous reaction apparatus according to any one of claims 1 to 14, wherein
the first raw material feeding unit comprises a mass meter for measuring a mass of the first raw material vessel, and
the second raw material feeding unit comprises a mass meter for measuring a mass of the second raw material vessel.

16. The continuous reaction apparatus according to claim 15, wherein based on results of measurement by the mass meter of the first raw material feeding unit and results of measurement by the mass meter of the second raw material feeding unit, the controller controls operation of the first raw material feeding unit and the second raw material feeding unit.

17. The continuous reaction apparatus according to any one of claims 1 to 16, wherein
the first raw material feeding unit comprises a first flowmeter for measuring the flow rate of the first raw material flowing through the first feed line, and
the second raw material feeding unit comprises a second flowmeter for measuring the flow rate of the second raw material flowing through the second feed line.

18. The continuous reaction apparatus according to claim 17, wherein based on results of measurement by the flowmeter of the first raw material feeding unit and results of measurement by the flowmeter of the second raw material feeding unit, the controller controls operation of the first raw material feeding unit and the second raw material feeding unit.

19. The continuous reaction apparatus according to any one of claims 1 to 18, wherein
the first raw material feeding unit comprises a pressure sensor configured to measure a pressure of the first raw material flowing through the first feed line, and
the second raw material feeding unit comprises a pressure sensor configured to measure a pressure of the second raw material flowing through the second feed line.

20. The continuous reaction apparatus according to claim 19, wherein based on results of measurement by the pressure sensor of the first raw material feeding unit and results of measurement by the pressure sensor of the second raw material feeding unit, the controller controls operation of the first raw material feeding unit and the second raw material feeding unit.

21. The continuous reaction apparatus according to any one of claims 1 to 20, wherein
the first raw material feeding unit comprises a temperature sensor configured to measure the temperature of the first raw material flowing through the first feed line,
the second raw material feeding unit comprises a temperature sensor configured to measure the temperature of the second raw material flowing through the second feed line,
based on results of measurement by the temperature sensor of the first raw material feeding unit, the controller controls cooling operation performed by the heat exchanger of the first raw material feeding unit, and
based on results of measurement by the temperature sensor of the second raw material feeding unit, the controller controls cooling operation performed by the heat exchanger of the second raw material feeding unit.

22. The continuous reaction apparatus according to any one of claims 1 to 21, wherein
the reactor unit comprises a temperature sensor configured to measure a temperature of the compound flowing through the reactor line, and
based on results of measurement by the temperature sensor of the reactor unit, the controller controls operation of the temperature control mechanism of the reactor unit.

23. The continuous reaction apparatus according to any one of claims 1 to 22, further comprising a pressure regulator unit configured to pressurize the first raw material vessel and the second raw material vessel to transfer the first raw material in the first raw material vessel and the second raw material in the second raw material vessel downstream in a transference direction.

24. The continuous reaction apparatus according to any one of claims 1 to 23, further comprising:
at least one other raw material feeding unit that comprises another raw material vessel configured to store therein another raw material different from at least one of the first raw material or the second raw material, another feed line configured to distribute the other raw material stored in the other raw material vessel, and a heat exchanger configured to exchange heat with the other raw material flowing through the other feed line, the raw material feeding unit being operable to perform feeding of the other raw material that has undergone heat exchange by the heat exchanger, wherein
the reactor unit comprises a plurality of static stirrers, the static stirrers being connected to the reactor line in series, and the temperature control mechanism being provided for the static stirrer located most upstream,
in the other raw material feeding unit, the other feed line is connected to the reactor line at a position between the static stirrer located on an upstream side and the static stirrer located on a downstream side and is operable to feed the other raw material flowing through the other feed line into the reactor line through which the reaction product discharged from the static stirrer located on the upstream side flows,
the reactor unit is operable to statically stir the reaction product discharged from the static stirrer located on the upstream side and the other raw material by using the static stirrer located on the downstream side to continuously produce a reaction product of the reaction product with the other raw material, and
the controller is operable to control an amount and a temperature of the other raw material that is being fed from the other raw material feeding unit into the reactor unit.

25. The continuous reaction apparatus according to claim 24, wherein
the reactor unit comprises a plurality of temperature control mechanisms configured to control the temperature in the static stirrers, each of the temperature control mechanisms being provided for the corresponding static stirrer, and
the controller controls operation of the temperature control mechanisms.

26. The continuous reaction apparatus according to claim 24 or 25, wherein
the other raw material is a raw material monomer solution containing a raw material monomer different from the second raw material, and
the reaction product is a block copolymer resulting from a living anionic polymerization reaction of the raw material monomer, the raw material monomer comprising two or more raw material monomers.

27. A continuous reaction apparatus comprising:
a static stirrer in which a polymerization initiator and one or more types of raw material monomer solutions are fed and the polymerization initiator and the one or more types of raw material monomer solutions are statically stirred, wherein
a flow rate and a temperature are controlled while the polymerization initiator and the solution of the one or more types of raw material monomer solutions are introduced into the static stirrer, and a reaction temperature in the static stirrer is controlled.

28. A continuous reaction apparatus comprising:
a static stirrer in which a polymerization initiator solution and one or more types of raw material monomer solutions are fed and the polymerization initiator solution and the one or more types of raw material monomer solutions are statically stirred,
a mechanism configured to individually feed the polymerization initiator solution and the one or more types of raw material monomer solutions continuously into the static stirrer, and
a mechanism configured to continuously discharge a reaction product produced in the static-stirring device out of a system.

29. The continuous reaction apparatus according to claim 28, wherein the reaction product is a polymer compound resulting from a living anionic polymerization reaction of the raw material monomers.

30. The continuous reaction apparatus according to claim 29, wherein the raw material monomers are optionally substituted styrene monomers.

31. The continuous reaction apparatus according to claim 29 or 30, wherein the raw material monomers include a compound of Formula (1): 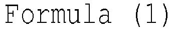 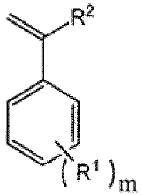 (in Formula (1), R¹ is a C₁₋₁₀ alkyl group, a C₁₋₁₀ alkoxy group, a trialkylsilyloxy group, an alkoxyalkyl group, a C₁₋₁₀ alkoxycarbonyl group, a C₁₋₁₀ alkoxy carbonyloxy group, or a halogen atom, R² is a hydrogen atom or a methyl group, and m is an integer of 0 to 5).

32. The continuous reaction apparatus according to any one of claims 29 to 31, wherein the raw material monomers include a compound of Formula (2): 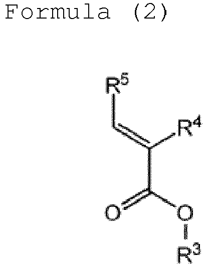 (in Formula (2), R³ is a hydrogen atom, a C₁₋₃₀ alkyl group, a trialkylsilyl group, or an alkoxyalkyl group, and R⁴ and R⁵ are independently a hydrogen atom, a methyl group, a cyano group, an alkoxycarbonyl group, or a trialkylsilyl group).

33. The continuous reaction apparatus according to any one of claims 29 to 32, wherein the raw material monomers include a compound of Formula (3): 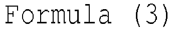 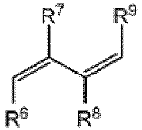 (in Formula (3), R⁶, R⁷, R⁸, and R⁹ are independently a hydrogen atom or a C₁₋₁₀ alkyl group).

34. The continuous reaction apparatus according to any one of claims 29 to 33, wherein the raw material monomers include a compound of Formula (4): 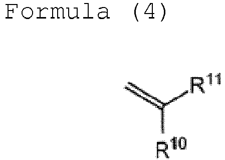 (in Formula (4), R¹⁰ and R¹¹ are independently a hydrogen atom, a C₁₋₁₀ alkyl group, a cyano group, or an alkoxycarbonyl group).

35. The continuous reaction apparatus according to any one of claims 29 to 34, wherein the raw material monomers include two or more kinds selected from the group consisting of compounds of Formulae (1) to (4): 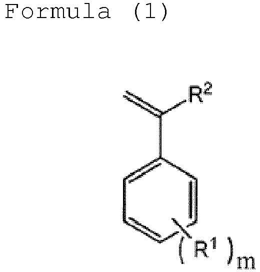 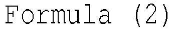 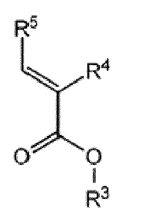 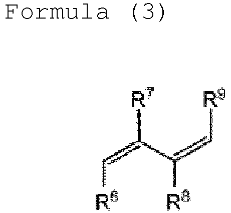 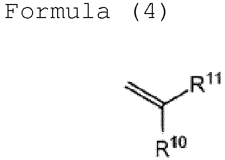 (in Formulae (1) to (4), R¹ is a C₁₋₁₀ alkyl group, a C₁₋₁₀ alkoxy group, a trialkylsilyloxy group, an alkoxyalkyl group, a C₁₋₁₀ alkoxycarbonyl group, a C₁₋₁₀ alkoxy carbonyloxy group, or a halogen atom, R² is a hydrogen atom or a methyl group, m is an integer of 0 to 5, R³ is a hydrogen atom, a C₁₋₃₀ alkyl group, a trialkylsilyl group, or an alkoxyalkyl group, R⁴ and R⁵ are independently a hydrogen atom, a methyl group, a cyano group, an alkoxycarbonyl group, or a trialkylsilyl group, R⁶, R⁷, R⁸, and R⁹ are independently a hydrogen atom or a C₁₋₁₀ alkyl group, and R¹⁰ and R¹¹ are independently a hydrogen atom, a C₁₋₁₀ alkyl group, a cyano group, or an alkoxycarbonyl group).

36. The continuous reaction apparatus according to claim 27 or 35, wherein
the static stirrer is provided with two or more types of raw material monomer solutions, and
the reaction product is a block copolymer resulting from a living anionic polymerization reaction of the two or more raw material monomers.

37. The continuous reaction apparatus according to any one of claims 27 to 36, wherein ranges of fluctuations in flow rates of the one or more types of raw material monomer solutions and the polymerization initiator solution that are being fed into the static stirrer are not greater than 1%.

38. The continuous reaction apparatus according to any one of claims 27 to 36, wherein ranges of fluctuations in flow rates of the one or more types of raw material monomer solutions and the polymerization initiator solution that are being fed into the reactor unit are not greater than 0.5%.

39. A method of continuous polymerization comprising:
with use of the continuous reaction apparatus according to any one of claims 1 to 23,
a step of continuously feeding the first raw material and the second raw material into the reactor unit while regulating the amount and the temperature of the first raw material that is being fed from the first raw material feeding unit into the reactor unit and the amount and the temperature of the second raw material that is being fed from the second raw material feeding unit into the reactor unit, and
a step of stirring the first raw material and the second raw material fed into the reactor unit by using the static stirrer to carry out a polymerization reaction and discharging the resulting reaction product downstream from the static stirrer.

40. A method of continuous polymerization comprising:
with use of the continuous reaction apparatus according to any one of claims 24 to 26,
a step of continuously feeding the first raw material and the second raw material into the reactor unit while regulating the amount and the temperature of the first raw material that is being fed from the first raw material feeding unit into the reactor unit and the amount and the temperature of the second raw material that is being fed from the second raw material feeding unit into the reactor unit,
a step of stirring the first raw material and the second raw material fed into the reactor unit by using the static stirrers and discharging the resulting reaction product downstream from the static stirrer located on the upstream side, and
a step of performing at least one round of a series of operation, the series of operation comprising continuously feeding the other raw material into the reactor unit while regulating the amount and the temperature of the other raw material that is being fed from the other raw material feeding unit into the reactor unit, stirring, by using the static stirrer located on the downstream side, the reaction product discharged downstream from the static stirrer located on the upstream side with the other raw material to carry out a polymerization reaction, and discharging the resulting reaction product downstream from the static stirrer located on the downstream side.
